# EUROPEAN PATENT APPLICATION

(11) **EP 4 694 372 A1**
(43) Date of publication of application: **11.02.2026**
(21) Application number: 24784225.5
(22) Date of filing: 01.04.2024
(51) Int. Cl.: H04W 52/02

(54) **TRANSMISSION METHOD, APPARATUS, AND STORAGE MEDIUM**

(30) Priority: 07.04.2023 CN 202310371200
(71) Applicant: Datang Mobile Communications Equipment Co., Ltd., Beijing 100085 (CN)
(72) Inventor: YANG, Meiying, Beijing 100085 (CN); WANG, Jiaqing, Beijing 100085 (CN); LUO, Chen, Beijing 100085 (CN); SU, Yuwan, Beijing 100085 (CN)
(74) Representative: Ipsilon
(86) International application number: PCT/CN2024/085258
(87) International publication number: WO 2024/208141

(57) **Abstract**

Provided in the embodiments of the present disclosure are a transmission method, an apparatus, and a storage medium. The method comprises: a terminal receiving a first signaling at a first moment, the first signaling indicating transmission of base station adaptive information, and the base station adaptive information comprising at least one of base station spatial-domain adaptive information, base station power-domain adaptive information, and base station discontinuous transmission (DTX)/discontinuous reception (DRX) adaptive information (110); the terminal acquiring the time for the base station adaptive information to take effect, the time to take effect comprising a second moment when the terminal or a base station transmits and/or receives the base station adaptive information according to the indication of the first signaling, and the second moment being later than the first moment (120); and the terminal transmitting and/or receiving the base station adaptive information on the basis of the time to take effect (130). The method, the apparatus and the storage medium provided in the embodiments of the present disclosure transmit the base station adaptive information on the basis of the time to take effect, thereby effectively ensuring transmission performance and energy-saving effects.

## Description

### CROSS-REFERENCES TO RELATED APPLICATIONS

The present application claims priority to Chinese patent application No. 2023103712007 filed on April 7, 2023, entitled "Transmission Method, Apparatus, and Storage Medium", which is hereby incorporated by reference in its entirety.

### FIELD

The present application relates to the field of communication, and in particular to transmission methods, transmission apparatuses, and a storage medium.

### BACKGROUND

In related art, energy-saving technologies for 5th-generation mobile communication technology(5G) network energy consumption mainly include a spatial-domain energy-saving technology, a power-domain energy-saving technology, and a discontinuous transmission (DTX)/discontinuous reception (DRX) energy-saving technology.

However, during the implementation of the above energy-saving technologies, there may be a problem in which a base station and a terminal have inconsistent understandings of the energy-saving information, affecting the transmission performance and energy-saving effect.

### BRIEF SUMMARY

Embodiments of the present application provide transmission methods, transmission apparatuses, and a storage medium to address the defects that energy-saving technologies may affect transmission performance and have poor energy-saving effects during implementation.

An embodiment of the present application provides a transmission method, performed by a terminal, including:
receiving a first signaling at a first moment, the first signaling indicating transmission of base station adaptive information, the base station adaptive information including at least one of base station spatial-domain adaptive information, base station power-domain adaptive information, or base station discontinuous transmission (DTX)/discontinuous receiving (DRX) adaptive information;
obtaining validation time of the base station adaptive information, the validation time including a second moment at which the terminal or a base station transmits and/or receives the base station adaptive information based on indication of the first signaling, the second moment being after the first moment; and
transmitting and/or receiving the base station adaptive information based on the validation time.

In an embodiment, according to the transmission method of an embodiment of the present application, the second moment includes at least one of:
any candidate moment, a maximum value of multiple candidate moments, a minimum value of multiple candidate moments, or a sum of multiple candidate moments.

In an embodiment, according to the transmission method of an embodiment of the present application, the candidate moment includes at least one of:
a candidate moment after a first time constant;
a candidate moment at which a Nth first reference signal is received or transmitted, N being a natural number greater than or equal to 1;
a candidate moment at which Mth first information is received or transmitted, M being a natural number greater than or equal to 1;
a candidate moment at which hybrid automatic repeat request (HARQ) information of the first signaling is fed back;
a candidate moment at which acknowledgement character (ACK) information of the first signaling is fed back;
a candidate moment after a processing time of the first signaling;
a candidate moment after a first minimum duration during which the base station performs change based on the base station spatial-domain adaptive information;
a candidate moment after a second minimum duration during which the base station performs change based on the base station power-domain adaptive information;
a candidate moment after a third minimum duration during which the base station performs change based on the base station DTX/DRX adaptive information;
a candidate moment within a time window with a moment at which a second reference signal is transmitted and/or received being an end point;
a candidate moment at which Kth first information after a second reference signal is reported, K being a natural number greater than or equal to 1; or
a candidate moment after a processing delay for changing transmission configuration information.

In an embodiment, according to the transmission method of an embodiment of the present application, the validation time is a first time window starting from the second moment.

In an embodiment, according to the transmission method of an embodiment of the present application, the first time window includes at least one of:
a time window for receiving or transmitting A first reference signals, A being a natural number greater than or equal to 1;
a time window for receiving or transmitting B pieces of first information, B being a natural number greater than or equal to 1; or
a time window for transmitting or receiving C pieces of first information after the second reference signal, C being a natural number greater than or equal to 1.

In an embodiment, according to the transmission method of an embodiment of the present application, the first time constant is a time constant with a granularity of at least one of a symbol, a slot, a subframe, or a radio frame;
the first reference signal is a channel state indicator-reference signal (CSI-RS);
the first information is a channel state indicator (CSI);
the second reference signal is a reference CSI-RS;
the transmission configuration information includes at least one of a bandwidth partial (BWP), a secondary cell (Scell), configured grant (CG), or semi-persistent scheduling (SPS).

In an embodiment, according to the transmission method of an embodiment of the present application, the method further includes:
receiving a second signaling, and changing the transmission configuration information based on the second signaling;
the first moment being a moment at which the first signaling is received based on unchanged transmission configuration information, and the candidate moment being a moment determined based on changed transmission configuration information.

In an embodiment, according to the transmission method of an embodiment of the present application, in case that the base station adaptive information includes the base station DTX/DRX adaptive information as well as the base station spatial-domain adaptive information and/or the base station power-domain adaptive information,
the validation time of the base station spatial-domain adaptive information and/or the base station power-domain adaptive information is determined based on the base station DTX/DRX adaptive information.

In an embodiment, according to the transmission method of an embodiment of the present application, in case that the validation time of the base station spatial-domain adaptive information and/or the base station power-domain adaptive information falls within a DTX/DRX inactive period indicated by the base station DTX/DRX adaptive information, the validation time of the base station spatial-domain adaptive information and/or the base station power-domain adaptive information is adjusted by at least one of:
postponing the validation time of the base station spatial-domain adaptive information and/or the base station power-domain adaptive information to a start of next active period of the DTX/DRX;
terminating the validation time of the base station spatial-domain adaptive information and/or the base station power-domain adaptive information; or
suspending the validation time of the base station spatial-domain adaptive information and/or the base station power-domain adaptive information, and postponing it to a moment after a start of next active period of the DTX/DRX.

In an embodiment, according to the transmission method of an embodiment of the present application, the first signaling is configured based on a radio resource control (RRC) signaling, and the first signaling is used to indicate an index of the base station adaptive information, or to indicate activation and/or deactivation of an index of the base station adaptive information.

In an embodiment, according to the transmission method of an embodiment of the present application, the base station spatial-domain adaptive information includes at least one piece of spatial-domain information; the at least one piece of spatial-domain information includes at least one of: at least one piece of antenna port information, at least one piece of antenna port muting pattern information, at least one piece of CSI-RS resource information, or at least one piece of CSI reporting information; and/or
the base station power-domain adaptive information includes at least one piece of power-domain information; the at least one piece of power-domain information includes at least one of: at least one piece of power-related information for an antenna port, at least one piece of power-related information for an antenna port muting pattern, at least one piece of power-related information for a CSI-RS resource, or at least one piece of power-related information for a CSI reporting; and/or
the base station DTX/DRX adaptive information includes DTX/DRX configuration information, the DTX/DRX configuration information including at least one of: an active period of DTX/DRX periodic data transmission, an inactive period without data transmission, or time position information for a start of DTX/DRX transmission.

An embodiment of the present application provides a transmission method, performed by a base station, including:
transmitting a first signaling at a third moment, the first signaling indicating transmission of base station adaptive information, the base station adaptive information including at least one of base station spatial-domain adaptive information, base station power-domain adaptive information, or base station discontinuous transmission (DTX)/discontinuous reception (DRX) adaptive information;
obtaining validation time of the base station adaptive information, the validation time including a second moment at which a terminal or the base station transmits and/or receives the base station adaptive information based on indication of the first signaling, the second moment being after the third moment; and
transmitting and/or receiving the base station adaptive information based on the validation time.

In an embodiment, according to the transmission method of an embodiment of the present application, the second moment includes at least one of:
any candidate moment, a maximum value of multiple candidate moments, a minimum value of multiple candidate moments, or a sum of multiple candidate moments.

In an embodiment, according to the transmission method of an embodiment of the present application, the candidate moment includes at least one of:
a candidate moment after a first time constant;
a candidate moment at which a Nth first reference signal is received or transmitted, N being a natural number greater than or equal to 1;
a candidate moment at which Mth first information is received or transmitted, M being a natural number greater than or equal to 1;
a candidate moment at which hybrid automatic repeat request (HARQ) information of the first signaling is fed back;
a candidate moment at which acknowledgement character (ACK) information of the first signaling is fed back;
a candidate moment after a processing time of the first signaling;
a candidate moment after a first minimum duration during which the base station performs change based on the base station spatial-domain adaptive information;
a candidate moment after a second minimum duration during which the base station performs change based on the base station power-domain adaptive information;
a candidate moment after a third minimum duration during which the base station performs change based on the base station DTX/DRX adaptive information;
a candidate moment within a time window with a moment at which a second reference signal is transmitted and/or received being an end point;
a candidate moment at which Kth first information after a second reference signal is reported, K being a natural number greater than or equal to 1; or
a candidate moment after a processing delay for changing transmission configuration information.

In an embodiment, according to the transmission method of an embodiment of the present application, the validation time is a first time window starting from the second moment.

In an embodiment, according to the transmission method of an embodiment of the present application, the first time window includes at least one of:
a time window for receiving or transmitting A first reference signals, A being a natural number greater than or equal to 1;
a time window for receiving or transmitting B pieces of first information, B being a natural number greater than or equal to 1; or
a time window for transmitting or receiving C pieces of first information after the second reference signal, C being a natural number greater than or equal to 1.

In an embodiment, according to the transmission method of an embodiment of the present application, the first time constant is a time constant with a granularity of at least one of a symbol, a slot, a subframe, or a radio frame;
the first reference signal is a channel state indicator-reference signal (CSI-RS);
the first information is a channel state indicator (CSI);
the second reference signal is a reference CSI-RS;
the transmission configuration information includes at least one of a bandwidth partial (BWP), a secondary cell (Scell), configured grant (CG), or semi-persistent scheduling (SPS).

In an embodiment, according to the transmission method of an embodiment of the present application, the method further includes:
transmitting a second signaling, the second signaling indicating changing the transmission configuration information;
the third moment being a moment at which the first signaling is transmitted based on unchanged transmission configuration information, and the candidate moment being a moment determined based on changed transmission configuration information.

In an embodiment, according to the transmission method of an embodiment of the present application, in case that the base station adaptive information includes the base station DTX/DRX adaptive information as well as the base station spatial-domain adaptive information and/or the base station power-domain adaptive information,
the validation time of the base station spatial-domain adaptive information and/or the base station power-domain adaptive information is determined based on the base station DTX/DRX adaptive information.

In an embodiment, according to the transmission method of an embodiment of the present application, in case that the validation time of the base station spatial-domain adaptive information and/or the base station power-domain adaptive information falls within a DTX/DRX inactive period indicated by the base station DTX/DRX adaptive information, the validation time of the base station spatial-domain adaptive information and/or the base station power-domain adaptive information is adjusted by at least one of:
postponing the validation time of the base station spatial-domain adaptive information and/or the base station power-domain adaptive information to a starting time of next active period of the DTX/DRX;
terminating the validation time of the base station spatial-domain adaptive information and/or the base station power-domain adaptive information; or
suspending the validation time of the base station spatial-domain adaptive information and/or the base station power-domain adaptive information, and postponing it to a moment after a start of next active period of the DTX/DRX.

In an embodiment, according to the transmission method of an embodiment of the present application, the first signaling is configured based on a radio resource control (RRC) signaling, and the first signaling is used to indicate an index of the base station adaptive information, or to indicate activation and/or deactivation of an index of the base station adaptive information.

In an embodiment, according to the transmission method of an embodiment of the present application, the base station spatial-domain adaptive information includes at least one piece of spatial-domain information; the at least one piece of spatial-domain information includes at least one of: at least one piece of antenna port information, at least one piece of antenna port muting pattern information, at least one piece of CSI-RS resource information, or at least one piece of CSI reporting information; and/or
the base station power-domain adaptive information includes at least one piece of power-domain information; the at least one piece of power-domain information includes at least one of: at least one piece of power-related information for an antenna port, at least one piece of power-related information for an antenna port muting pattern, at least one piece of power-related information for a CSI-RS resource, or at least one piece of power-related information for a CSI reporting; and/or
the base station DTX/DRX adaptive information includes DTX/DRX configuration information, the DTX/DRX configuration information including at least one of: an active period of DTX/DRX periodic data transmission, an inactive period without data transmission, or time position information for a start of DTX/DRX transmission.

An embodiment of the present application provides a transmission apparatus, including: a memory, a transceiver, and a processor,
where the memory is used for storing a computer program; the transceiver is used for receiving and transmitting data under control of the processor; and the processor is used for reading the computer program in the memory and performing following operations:
receiving a first signaling at a first moment, the first signaling indicating transmission of base station adaptive information, the base station adaptive information including at least one of base station spatial-domain adaptive information, base station power-domain adaptive information, or base station discontinuous transmission (DTX)/discontinuous receiving (DRX) adaptive information;
obtaining validation time of the base station adaptive information, the validation time including a second moment at which the base station adaptive information is transmitted and/or received based on the first signaling, the second moment being after the first moment; and
transmitting and/or receiving the base station adaptive information based on the validation time.

An embodiment of the present application provides a transmission apparatus, including: a memory, a transceiver, and a processor,
where the memory is used for storing a computer program; the transceiver is used for receiving and transmitting data under control of the processor; and the processor is used for reading the computer program in the memory and performing following operations:
transmitting a first signaling at a third moment, the first signaling indicating transmission of base station adaptive information, the base station adaptive information including at least one of base station spatial-domain adaptive information, base station power-domain adaptive information, or base station discontinuous transmission (DTX)/discontinuous reception (DRX) adaptive information;
obtaining validation time of the base station adaptive information, the validation time including a second moment at which the base station adaptive information is transmitted and/or received based on the first signaling, the second moment being after the third moment; and
transmitting and/or receiving the base station adaptive information based on the validation time.

An embodiment of the present application provides a transmission apparatus, including:
a signaling receiving unit, used for receiving a first signaling at a first moment, the first signaling indicating transmission of base station adaptive information, the base station adaptive information including at least one of base station spatial-domain adaptive information, base station power-domain adaptive information, or base station discontinuous transmission (DTX)/discontinuous receiving (DRX) adaptive information;
a first time unit, used for obtaining validation time of the base station adaptive information, the validation time including a second moment at which the base station adaptive information is transmitted and/or received based on the first signaling, the second moment being after the first moment; and
a first transmitting unit, used for transmitting and/or receiving the base station adaptive information based on the validation time.

An embodiment of the present application provides a transmission apparatus, including:
a signaling transmitting unit, used for transmitting a first signaling at a third moment, the first signaling indicating transmission of base station adaptive information, the base station adaptive information including at least one of base station spatial-domain adaptive information, base station power-domain adaptive information, or base station discontinuous transmission (DTX)/discontinuous reception (DRX) adaptive information;
a second time unit, used for obtaining validation time of the base station adaptive information, the validation time including a second moment at which the base station adaptive information is transmitted and/or received based on the first signaling, the second moment being after the third moment; and
a second transmitting unit, used for transmitting and/or receiving the base station adaptive information based on the validation time.

An embodiment of the present application further provides a processor-readable storage medium, where the processor-readable storage medium stores a computer program, the computer program is used to cause a processor to perform the method as described above.

In the transmission methods, the transmission apparatuses and the storage medium provided by the embodiments of the present application, a second moment for transmitting and/or receiving base station adaptive information based on a first signaling is configured to obtain validation time of the base station adaptive information, and the base station adaptive information may be transmitted based on the validation time, addressing the problem that the base station and the terminal have inconsistent understanding of the transmission time of energy-saving information which affects the transmission performance and energy-saving effect, and effectively ensuring transmission performance and energy-saving effect.

### BRIEF DESCRIPTION OF THE DRAWINGS

To clearly illustrate the solutions in the embodiments of the present application, the drawings used in the description of the embodiments are briefly described below. Obviously, the drawings in the following description are only some embodiments of the present application, and other drawings may be obtained according to these drawings without any creative effort for those skilled in the art.
FIG. 1 is a first schematic diagram of a transmission method according to an embodiment of the present application;
FIG. 2 is a second schematic diagram of a transmission method according to an embodiment of the present application;
FIG. 3 is a first schematic diagram of a transmission apparatus according to an embodiment of the present application;
FIG. 4 is a second schematic diagram of a transmission apparatus according to an embodiment of the present application;
FIG. 5 is a third schematic diagram of a transmission apparatus according to an embodiment of the present application; and
FIG. 6 is a fourth schematic diagram of a transmission apparatus according to an embodiment of the present application.

### DETAILED DESCRIPTION

In the embodiments of the present application, the term "and/or" describes a related relationship of associated objects, and indicates that there may be three kinds of relationships. For example, A and/or B may represent that A exists alone, A and B exist simultaneously, and B exists alone. Character "/" generally indicates that the associated objects have an "or" relationship.

In the embodiments of the present application, the term "multiple" refers to two or more than two, and other quantifiers are similar to it.

The solutions in the embodiments of the present application are clearly and completely described in the following with reference to the accompanying drawings in the embodiments of the present application. These embodiments are only a part of the embodiments of the present application, and not all of the embodiments. All other embodiments obtained by those skilled in the art based on the embodiments of the present application without any creative effort belong to the scope of the present application.

Base station energy-saving technologies for 5G network energy consumption mainly include spatial-domain energy-saving technology, power-domain energy-saving technology, and DTX/DRX energy-saving technology.

The spatial-domain energy-saving technology is a technology that reduces, in case that the base station determines that the load is low, a number of transmit antennas for downlink physical channels, such as physical downlink shared channel (PDSCH), physical downlink control channel (PDCCH), and channel state indicator-reference signal (CSI-RS) to reduce energy consumption of the base station.

The power-domain energy-saving technology is a technology that adaptively adjust transmit power on the base station side. The main purpose of power-domain energy-saving technology is to dynamically adjust transmit power or power spectral density (PSD) of downlink signals and channels by reducing PDSCH transmit power and enhancing user equipment (UE) configuration and/or UE feedback, to assist base station/network energy-saving operations.

The DTX/DRX energy-saving technology involves discontinuous transmission and/or reception in time by a base station, and the base station performs information transmission based on configured transmission pattern. For example, the base station performs signals and/or data transmission during DTX on/active periods and does not perform signals and/or data transmission during a DTX off/non-active period. The base station performs signals and/or data reception during a DRX on/active period and does not perform signals and/or data reception during a DRX off/non-active period.

However, during the implementation of these energy-saving technologies, there may be a problem that the base station and the terminal have inconsistent understanding of energy-saving information, or there may be a situation where a dynamic signaling is not received correctly or is received late due to the processing delay indicated by a dynamic signaling, the conversion time of the base station energy-saving technology, and related delays, affecting transmission performance and energy-saving effect.

In this regard, the embodiments of the present application provide a transmission method to implement a solution to a validation time of an indication signaling of spatial-domain adaptive adjustment, power-domain adaptive adjustment, and base station DTX/DRX adaptive adjustment in base station energy-saving technology.

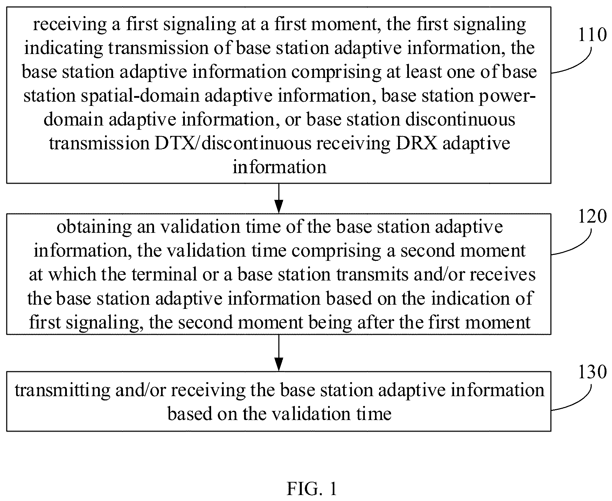

FIG. 1 is a first schematic diagram of a transmission method according to an embodiment of the present application. As shown in FIG. 1, the method is performed by a terminal, and the method includes the following steps.

S110: receiving a first signaling at a first moment, the first signaling indicating transmission of base station adaptive information, the base station adaptive information including at least one of base station spatial-domain adaptive information, base station power-domain adaptive information, or base station discontinuous transmission (DTX)/discontinuous receiving (DRX) adaptive information.

Here, the base station adaptive information is used to represent the relevant information for adaptive adjustment in the base station energy-saving technology. For the spatial-domain energy-saving technology, power-domain energy-saving technology and DTX/DRX energy-saving technology, the base station adaptive information may include at least one of the base station spatial-domain adaptive information, base station power-domain adaptive information, or base station DTX/DRX adaptive information.

The base station spatial-domain adaptive information represents at least one piece of spatial-domain information applied by the base station when saving energy based on the spatial-domain energy-saving technology. The at least one piece of spatial-domain information here may include at least one piece of antenna port information, at least one piece of antenna port mute pattern information, at least one piece of CSI-RS resource information and at least one piece of channel state indicator (CSI) reporting information.

The base station power-domain adaptive information represents at least one piece of power-domain information applied by the base station when saving energy based on the power-domain energy-saving technology. The at least one piece of power-domain information here includes at least one of: at least one piece of power-related information for an antenna port, at least one piece of power-related information for an antenna port muting pattern, at least one piece of power-related information for a CSI-RS resource, or at least one piece of power-related information for a CSI reporting.

The base station DTX/DRX adaptive information represents the DTX/DRX configuration information applied by the base station when saving energy based on the DTX/DRX energy-saving technology. The DTX/DRX configuration information here includes at least one of: an active period of DTX/DRX periodic data transmission, an inactive period without data transmission, or time position information for a start of DTX/DRX transmission.

The first signaling is a signaling indicating transmission of base station adaptive information. Specifically, indicating transmission of base station adaptive information may indicate a type of base station adaptive information being transmitted and/or received, an index of the base station adaptive information being transmitted and/or received, an occasion of the base station adaptive information being transmitted and/or received, i.e., validation time of the base station adaptive information, or a transmission configuration for transmitting and/or receiving the base station adaptive information, which is not limited in the embodiments of the present application.

The base station may transmit the first signaling based on a configuration of the first signaling. Accordingly, the terminal may receive the first signaling transmitted from the base station. Here, the first signaling may be a dynamic signaling and may include at least one of Layer 1 signaling, downlink control indicator (DCI) signaling, or medium access control-control element (MAC-CE) signaling.

In an embodiment of the present application, the moment at which the terminal receives the first signaling is referred as the first moment.

S120: obtaining validation time of the base station adaptive information, the validation time including a second moment at which the terminal or a base station transmits and/or receives the base station adaptive information based on indication of the first signaling, the second moment being after the first moment.

Specifically, for the base station adaptive information indicated by received first signaling, the terminal may obtain the validation time of the base station adaptive information. Here, the validation time of the base station adaptive information is the time at which the base station adaptive information is allowed to be transmitted.

The validation time may be a specific moment, referred to herein as the second moment. That is, the base station adaptive information is validated at the second moment, and the base station and the terminal may transmit the base station adaptive information at the second moment.

The validation time may also be a time window, such as first time window. Each moment in the first time window is a second moment that may be used to transmit and/or receive the base station adaptive information. That is, the base station adaptive information is validated within the first time window, and the base station and the terminal may transmit the base station adaptive information within the first time window.

The validation time of the base station adaptive information must be later than a moment at which the terminal receives the first signaling indicating the transmission of the base station adaptive information. Thus, the second moment representing the validation time, or a start of the validation time, must be after the first moment.

Here, the validation time of the base station adaptive information may be validation time indicated by the base station, or may be validation time calculated by the terminal based on the information indicated by the base station, or may be validation time calculated by the terminal based on a predefined rule, which is not limited in the embodiments of the present application. It is clear that the base station and the terminal use the same method to determine the validation time, that is, the validation times obtained by the base station and the terminal are the same.

S130: transmitting and/or receiving the base station adaptive information based on the validation time.

Specifically, after determining the validation time of the base station adaptive information, the terminal may transmit and/or receive the base station adaptive information based on the validation time. In case that the validation time is represented as a second moment, the terminal may transmit and/or receive the base station adaptive information at the second moment. In case that the validation time is represented as a time window, the terminal may transmit and/or receive the base station adaptive information within the time window.

In the transmission method provided by the embodiments of the present application, a second moment for transmitting and/or receiving base station adaptive information based on a first signaling is configured to obtain the validation time of the base station adaptive information, and the base station adaptive information is transmitted based on the validation time, addressing the problem that the base station and the terminal have inconsistent understanding of the transmission time of energy-saving information which affects the transmission performance and energy-saving effect, and effectively ensuring transmission performance and energy-saving effect.

Based on the above embodiment, the second moment includes at least one of:
any candidate moment, a maximum value of at least two candidate moments, a minimum value of multiple candidate moments, or a sum of multiple candidate moments.

Here, the candidate moment is a moment after the first moment. The candidate moment may be a preconfigured moment, a moment obtained by postponing a preconfigured duration starting from the first moment, or a moment obtained by postponing a preconfigured duration starting from the third moment at which the base station transmits the first signaling. There may be multiple candidate moments. In case that there are multiple candidate moments, any one of the multiple candidate moments may be selected as the second moment, or any number of candidate moments may be selected from the multiple candidate moments, and the maximum, minimum, or sum of the multiple candidate moments may be determined as the second moment.

The second moment here may be a second moment indicated by the base station, a second moment calculated by the terminal from multiple candidate moments based on information indicated by the base station, or a second moment calculated by the terminal from multiple candidate moments based on a predefined rule, which is not limited in the embodiments of the present application. It is clear that the base station and the terminal use the same method to determine the second moment, that is, the second moment obtained by the base station and the terminal are the same.

Based on any of above embodiments, the candidate moment includes at least one of:
a candidate moment after a first time constant;
a candidate moment at which a Nth first reference signal is received or transmitted, N being a natural number greater than or equal to 1;
a candidate moment at which Mth first information is received or transmitted, M being a natural number greater than or equal to 1;
a candidate moment at which hybrid automatic repeat request (HARQ) information of the first signaling is fed back;
a candidate moment at which acknowledgement character (ACK) information of the first signaling is fed back;
a candidate moment after a processing time of the first signaling;
a candidate moment after a first minimum duration during which the base station performs change based on the base station spatial-domain adaptive information;
a candidate moment after a second minimum duration during which the base station performs change based on the base station power-domain adaptive information;
a candidate moment after a third minimum duration during which the base station performs change based on the base station DTX/DRX adaptive information;
a candidate moment within a time window with a time end of a moment at which a second reference signal is transmitted and/or received;
a candidate moment at which Kth first information after a second reference signal is reported, K being a natural number greater than or equal to 1; or
a candidate moment after a processing delay for changing transmission configuration information.

Specifically, the first time constant may be a preconfigured time constant, for example, a time constant with a granularity of at least one of a symbol, a slot, a subframe, or a radio frame. The first time constant here may be expressed as a moment or as a duration. In case that the first time constant is expressed as a moment, a candidate moment after the first time constant, that is, a moment after the first time constant, is referred as the candidate moment. In case that the first time constant is expressed as a duration, a candidate moment after the first time constant, that is, a moment obtained by postponing the first time constant from the reference moment is determined as the candidate moment.

Here, the reference moment may be the first moment at which the terminal receives the first signaling , or the third moment at which the base station transmits the first signaling .

The first reference signal may include at least one of a channel state indicator-reference signal (CSI-RS), a tracking reference signal (TRS), a phase-tracking reference signal (PTRS), a sounding reference signal (SRS), or a synchronization signal block (SSB). The candidate moment at which a Nth first reference signal is received or transmitted may be a moment at which the terminal receives the Nth first reference signal, accumulated since the reference moment, or the moment at which the base station transmits the Nth first reference signal, accumulated since the reference moment. Here, N is a natural number greater than or equal to 1.

The first information may include at least one of a channel state indicator (CSI), acknowledgement character (ACK) information for the first signaling, or ACK/negative acknowledgement character (NACK) information for the first signaling. The candidate moment at which Mth first information is received or transmitted may be a moment at which the terminal transmits the Mth first information, accumulated since the reference moment, or a moment at which the base station receives a Mth CSI, accumulated since the reference moment. Here, M is a natural number greater than or equal to 1.

The candidate moment at which hybrid automatic repeat request (HARQ) information is fed back may be a moment at which the terminal feeds back HARQ information for the first signaling after the reference moment.

The candidate moment at which the ACK information for the first signaling is fed back may be a moment at which the terminal feeds back the ACK for the first signaling after the reference moment.

The processing time of the first signaling refers to the delay incurred by the terminal processing the first signaling itself. Processing the first signaling here includes demodulation, decoding, and parsing. A candidate moment after the processing time of the first signaling, that is a moment obtained by postponing the reference moment by the processing time of the first signaling, is determined as the candidate moment.

In case that the base station adaptive information includes base station spatial-domain adaptive information, the minimum duration for the base station to change based on the base station spatial-domain adaptive information may be referred as the first minimum duration. Specifically, the first minimum duration here may be the minimum processing delay for the base station to perform antenna power-off and power-on operations based on the base station spatial-domain adaptive information. A candidate moment after the first minimum duration, that is a moment obtained by postponing the reference moment by the first minimum duration, is determined as the candidate moment.

In case that the base station adaptive information includes base station power-domain adaptive information, the minimum duration for the base station to change based on the base station power-domain adaptive information may be referred as the second minimum duration. Specifically, the second minimum duration here may be the minimum processing delay for the base station to change transmit power based on the base station power-domain adaptive information. A candidate moment after the second minimum duration, that is a moment obtained by postponing the reference moment by the second minimum duration, is determined as the candidate moment.

In case that the base station adaptive information includes base station DTX/DRX adaptive information, the minimum duration for the base station to change based on the base station DTX/DRX adaptive information may be referred as the third minimum duration. Specifically, the third minimum duration here may be the minimum processing delay for a base station to change DTX/DRX configuration information based on the base station DTX/DRX adaptive information. A candidate moment after the third minimum duration, that is a moment obtained by postponing the reference moment by the third minimum duration, is determined as the candidate moment.

The second reference signal may include at least one of a CSI-RS signal, an SRS signal, a PTRS signal, or a TRS signal at the first reference moment. The first reference moment may be a moment after the first moment, a moment after the third moment, or a moment before the second moment.

A time window with a moment of transmission and/or reception of the second reference signal as its end may be a time window starting at the reference moment and ending at a moment at which the base station transmits the second reference signal, or a time window starting at the reference moment and ending at a moment at which the base station receives the second reference signal. A candidate moment within a time window with the moment of transmission and/or reception of the second reference signal as its end, that is a moment within the time window, is determined as the candidate moment.

A candidate moment for reporting Kth first information after the second reference signal, that is a moment at which the terminal reports the Kth first information, accumulated since the second reference signal, is determined as the candidate moment. Here, K is a natural number greater than or equal to 1.

The transmission configuration information may include at least one of band width partial (BWP), secondary cell (Scell), configured grant (CG), or semi-persistent scheduling (SPS). The processing delay for changing the transmission configuration information may include at least one of: a processing delay required for BWP switching/activation/deactivation, a processing delay required for Scell handover/activation/deactivation, a processing delay required for CG activation and/or deactivation, or a processing delay required for SPS activation and/or deactivation. A candidate moment after the processing delay for changing the transmission configuration information, that is a moment obtained by postponing the reference moment by the processing delay for changing the transmission configuration information, is determined as the candidate moment.

The method provided in the embodiments of present application encompasses various representations of candidate moments, based on which, the second moment and thus the validation time are determined, to avoid a situation where the first signaling is not received correctly or is received late due to a processing delay indicated by the first signaling, the conversion time of the base station energy-saving technology, and related delays, ensuring the reliability of the base station energy-saving technology.

Based on any of above embodiments, the validation time is a first time window with the second moment as a start.

Specifically, the validation time may be represented as a time window, which is referred to herein as the first time window. Here, the start of the first time window may be at least one of the second moments determined in the above embodiments.

Based on any of above embodiments, the first time window includes at least one of:
a time window for receiving or transmitting A first reference signals, A being a natural number greater than or equal to 1;
a time window for receiving or transmitting B pieces of first information, B being a natural number greater than or equal to 1; or
a time window for transmitting or receiving C pieces of first information after the second reference signal, C being a natural number greater than or equal to 1.

Specifically, the first reference signal may include at least one of a channel state indicator-reference signal (CSI-RS), a tracking reference signal (TRS), phase-tracking reference signal (PTRS), a sounding reference signal (SRS), or a synchronization signal block (SSB). The time window for receiving or transmitting A first reference signals may be a time window starting at the second moment and ending at a moment within a time period during which the terminal receives the A first reference signals. Alternatively, the time window for receiving or transmitting A first reference signals may be a time window starting at the second moment and ending at a moment within a time period during which the base station transmits the A first reference signals.

The first information may include at least one of a channel state indicator (CSI), information indicating whether an ACK information of the first signaling is correctly received, or ACK/NACK reception information of the first signaling. The time window for receiving or transmitting Bth first information may be a time window starting at the second moment and ending at the moment at which the terminal transmits the Bth first information. Alternatively, the time window for receiving or transmitting the B first information may be a time window starting at the second moment and ending at the moment at which the base station receives the Bth first information.

The second reference signal may include at least one of a CSI-RS signal, an SRS signal, a PTRS signal, or a TRS signal at the first reference moment. The first reference moment may be a moment after the first moment, a moment after the third moment, or a moment before the second moment. The time window for transmitting or receiving C pieces of first information after the second reference signal may be a time window starting at the second moment and ending at a moment within a time period during which the terminal transmits the C pieces of first information after the second reference signal. Or, the time window for transmitting or receiving the C pieces of first information after the second reference signal may be a time window starting at the second moment and ending at a moment within a time period during which the base station receives the C pieces of first information after the second reference signal.

In the method provided in the embodiments of present application, various representations of the first time window are included, and the validation time is determined based on the first time window to avoid a situation where the first signaling is not received correctly or is received late due to a processing delay indicated by the first signaling, the conversion time of the base station energy-saving technology, and related delays, ensuring the reliability of the base station energy-saving technology.

Based on any of above embodiments, the first time constant is a time constant with a granularity of at least one of a symbol, a slot, a subframe, or a radio frame;
the first reference signal is a channel state indicator-reference signal (CSI-RS);
the first information is a channel state indicator (CSI);
the second reference signal is a reference CSI-RS;
the transmission configuration information includes at least one of a bandwidth partial (BWP), a secondary cell (Scell), configured grant (CG), or semi-persistent scheduling (SPS).

Based on any of above embodiments, the method further includes:
receiving a second signaling, and changing the transmission configuration information based on the second signaling;
the first moment being a moment at which the first signaling is received based on unchanged transmission configuration information, and the candidate moment being a moment determined based on changed transmission configuration information.

Specifically, the base station may transmit the second signaling to the terminal for changing the transmission configuration information. Correspondingly, the terminal may receive the second signaling and change, based on the second signaling, the transmission configuration information for information transmission. The transmission configuration information here may include at least one of a BWP, Scell, CG, or SPS. Thus, the second signaling may be an indication signaling of BWP switching/activation/deactivation, Scell handover/activation/deactivation, CG activation/deactivation or SPS activation/deactivation, and includes at least one of:
an indication signaling of at least one of BWP switching, activation, or deactivation;
an indication signaling of at least one of Scell handover, activation, or deactivation;
an indication signaling of CG activation and/or deactivation; or
an indication signaling of SPS activation and/or deactivation.

After receiving the second signaling, the terminal may change the transmission configuration information based on the second signaling, for example, BWP switching/activation/deactivation, Scell handover/activation/deactivation, CG activation/deactivation or SPS activation/deactivation. Therefore, the transmission configuration information before handover/activation/deactivation is performed based on the second signaling may be referred as unchanged transmission configuration information, and the transmission configuration information after handover/activation/deactivation is performed based on the second signaling may be referred as changed transmission configuration information.

Considering a transmission order of the first signaling and the second signaling, i.e., the first signaling is transmitted before the second signaling, it may be determined that the terminal receives the first signaling based on unchanged transmission configuration information. Therefore, the first moment at which the terminal receives the first signaling is a moment at which the terminal receives the first signaling based on unchanged transmission configuration information.

In addition, the terminal needs to transmit the base station adaptive information based on changed transmission configuration information. Therefore, the candidate moment at which the validation time is determined is a candidate moment determined based on changed transmission configuration information. For example, the candidate moment for receiving or transmitting the Nth first reference signal is a candidate moment for receiving or transmitting the Nth first reference signal based on changed transmission configuration information. For another example, the candidate moment for feeding back HARQ information for the first signaling is a candidate moment for feeding back HARQ information for the first signaling based on changed transmission configuration information.

In the method provided by the embodiments of the present application, validation time based on changed transmission configuration information is configured for the scenario in which the transmission configuration information is changed to avoid the problem of inconsistent understanding of the first signaling for energy-saving of the base station in case that information is transmitted based on changed transmission configuration information, improving the transmission performance of the terminal and further reducing the energy consumption of the base station.

Based on any of above embodiments, in case that the base station adaptive information includes the base station DTX/DRX adaptive information as well as the base station spatial-domain adaptive information and/or the base station power-domain adaptive information,
the validation time of the base station spatial-domain adaptive information and/or the base station power-domain adaptive information is determined based on the base station DTX/DRX adaptive information.

Specifically, the first signaling may indicate both base station DTX/DRX adaptive information and base station spatial-domain adaptive information, may indicate both base station DTX/DRX adaptive information and base station power-domain adaptive information, or may indicate both base station DTX/DRX adaptive information and base station spatial-domain adaptive information and base station power-domain adaptive information.

In case that the base station adaptive information indicated by the above-mentioned types of first signaling includes base station DTX/DRX adaptive information, validation time of the base station spatial-domain adaptive information and/or base station power-domain adaptive information is associated with DTX/DRX configuration information in the base station DTX/DRX adaptive information.

The DTX/DRX configuration information in the base station DTX/DRX adaptive information clearly distinguishes between an active period of DTX/DRX periodic data transmission and an inactive period without data transmission. Also, data transmission is performed between the base station and the terminal only during the active period, and not during the inactive period for a configuration based on DTX/DRX configuration information. Therefore, the base station and the terminal may only transmit the base station spatial-domain adaptive information and/or the base station power-domain adaptive information during the active period, and not transmit the base station spatial-domain adaptive information and/or the base station power-domain adaptive information during the inactive period.

Thus, in case that the base station DTX/DRX adaptive information is validated, the validation time of the base station spatial-domain adaptive information and/or base station power-domain adaptive information must fall within the active period of the DTX/DRX periodic data transmission determined based on the DTX/DRX configuration information.

In the method provided in the embodiments of the present application, validation time of base station spatial-domain adaptive information and/or base station power-domain adaptive information is configured within the validation time of the base station DTX/DRX adaptive information, to avoid the problem of unclear scope in case that the validation time is configured for different base station energy-saving schemes separately, which helps improve terminal transmission performance and reduce base station energy consumption.

Based on any of above embodiments, in case that the validation time of the base station spatial-domain adaptive information and/or the base station power-domain adaptive information falls within a DTX/DRX inactive period indicated by the base station DTX/DRX adaptive information, the validation time of the base station spatial-domain adaptive information and/or the base station power-domain adaptive information is adjusted by at least one of:
postponing the validation time of the base station spatial-domain adaptive information and/or the base station power-domain adaptive information to a start of next active period of the DTX/DRX;
terminating the validation time of the base station spatial-domain adaptive information and/or the base station power-domain adaptive information; or
suspending and postponing the validation time of the base station spatial-domain adaptive information and/or the base station power-domain adaptive information to a moment after a start of next active period of the DTX/DRX.

Specifically, within the validation time of the base station DTX/DRX adaptive information, in case that validation time of acquired base station spatial-domain adaptive information and/or base station power-domain adaptive information falls within an inactive period of DTX/DRX indicated by the base station DTX/DRX adaptive information, that is, the validation time of the base station spatial-domain adaptive information and/or base station power-domain adaptive information falls within an inactive period of DTX/DRX during which no data transmission is performed, which may be understood as a conflict between the validation time of the base station spatial-domain adaptive information and/or base station power-domain adaptive information and configuration of the base station DTX/DRX adaptive information, the validation time of the base station spatial-domain adaptive information and/or base station power-domain adaptive information needs to be adjusted so that the adjusted validation time falls within an active period of DTX/DRX.

Here, the adjustment method may include at least one of the following.

The validation time of the base station spatial-domain adaptive information and/or the base station power-domain adaptive information is postponed to a start of next active period of DTX/DRX. That is, in case that the validation time is the second moment, the second moment may be postponed, and the start of the next active period of DTX/DRX may be determined as the postponed second moment. Alternatively, in case that the validation time is the first time window, the overlap between the first time window and the inactive period may be postponed, and the start of the next active period of DTX/DRX may be determined as the start of the postponed overlap.

The validation time of the base station spatial-domain adaptive information and/or base station power-domain adaptive information is terminated. That is, in case that the validation time is the second moment, the second moment within the inactive period may be deleted. Alternatively, in case that the validation time is the first time window, the overlap between the first time window and the inactive period may be deleted.

The validation time of the base station spatial-domain adaptive information and/or base station power-domain adaptive information is suspended and postponed to a moment after the start of the next active period of the DTX/DRX. That is, in case that the validation time is the second moment, the second moment within the inactive period may be postponed by a preset duration so that the postponed second moment falls within the next active period. Alternatively, in case that the validation time is the first time window, the overlap between the first time window and the inactive period may be postponed by a preset duration so that the postponed overlap falls within the next active period.

Based on any of above embodiments, the first signaling is configured based on a radio resource control (RRC) signaling, and the first signaling is used to indicate an index of the base station adaptive information, or to indicate activation and/or deactivation of an index of the base station adaptive information.

Specifically, after transmitting the first signaling, the base station may configure the first signaling to the terminal. Further, the base station may configure the first signaling to indicate at least one of base station spatial-domain adaptive information, base station power-domain adaptive information, or base station DTX/DRX adaptive information.

Further, the base station may configure the first signaling based on RRC signaling. Specifically, the first signaling may be configured based on RRC signaling to indicate at least one of the index of the base station spatial-domain adaptive information, the index of the base station power-domain adaptive information, or the index of the base station DTX/DRX adaptive information. The index here may be an RRC index.

The base station may also configure, based on RRC signaling, the first signaling to activate and/or deactivate at least one of the index of the base station spatial-domain adaptive information, the index of the base station power-domain adaptive information, or the index of the base station DTX/DRX adaptive information. The index here may be an RRC index.

In an embodiment, the base station may also, based on the RRC signaling configuration, activate or indicate at least one of the index of the base station spatial-domain adaptive information, the index of the base station power-domain adaptive information, or the index of the base station DTX/DRX adaptive information through a MAC-CE.

In an embodiment, the base station may also configure the first signaling activation based on RRC signaling. Upon activation, the base station semi-persistently transmits at least one of the following information: base station spatial-domain adaptive information or base station power-domain adaptive information. Alternatively, the terminal semi-persistently transmits at least one of the following information: base station spatial-domain adaptive information CSI or base station power-domain adaptive information CSI.

Based on any of the above embodiments, the base station spatial-domain adaptive information includes at least one piece of spatial-domain information. The at least one piece of spatial-domain information includes at least one following: at least one piece of antenna port information, at least one piece of antenna port muting pattern information, at least one piece of CSI-RS resource information, or at least one piece of CSI reporting information.

The CSI-RS resource information includes at least one of: antenna port configuration for CSI-RS transmission, time-domain resource configuration, and frequency-domain resource configuration information.

The CSI reporting information includes channel state information, specifically including at least one of: wideband precoding matrix indicator (PMI), rank indicator (RI), layer indicator (LI), wideband channel quality indicator (CQI), subband PMI, subband CQI, CSI-resource indicator (CRI), reference signal received power (RSRP), reference signal received quality (RSRQ), received signal strength indicator (RSSI), and signal interference noise ratio (SINR).

The base station power-domain adaptive information includes at least one piece of power-domain information. The at least one piece of power-domain information includes at least one of: at least one piece of power-related information for an antenna port, at least one piece of power-related information for an antenna port muting pattern, at least one piece of power-related information for a CSI-RS resource, or at least one piece of power-related information for CSI reporting.

The base station DTX/DRX adaptive information includes DTX/DRX configuration information, which includes at least one of: activation time for DTX/DRX periodic data transmission, inactivation time without data transmission, or time location information for the start of DTX/DRX transmission.

The data transmission includes at least one of downlink (DL) transmission or uplink (UL) transmission, including at least one of transmission or reception by the base station, and further includes at least one of: PDCCH transmission, PDSCH transmission, CSI-RS transmission, PUCCH transmission, PUSCH transmission, SRS transmission, random access channel (RACH) transmission, or paging transmission.

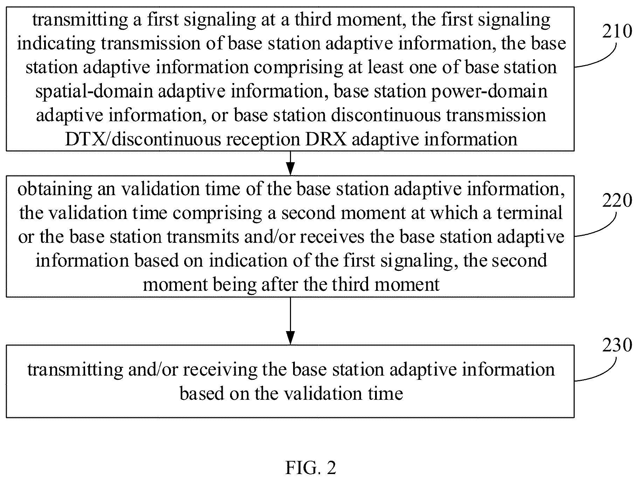

Based on any of above embodiments, FIG. 2 is a second schematic diagram of a transmission method according to an embodiment of the present application. As shown in FIG. 2, the method is performed by a base station, and the method includes:
S210: transmitting a first signaling at a third moment, the first signaling indicating transmission of base station adaptive information, the base station adaptive information including at least one of base station spatial-domain adaptive information, base station power-domain adaptive information, or base station discontinuous transmission (DTX)/discontinuous reception (DRX) adaptive information.

Here, the base station adaptive information is used to represent the relevant information for adaptive adjustment in the base station energy-saving technology. For the spatial-domain energy-saving technology, power-domain energy-saving technology and DTX/DRX energy-saving technology, the base station adaptive information may include at least one of the base station spatial-domain adaptive information, base station power-domain adaptive information, or base station DTX/DRX adaptive information.

The base station spatial-domain adaptive information represents at least one piece of spatial-domain information applied by the base station when saving energy based on the spatial-domain energy-saving technology. The at least one piece of spatial-domain information here may include at least one piece of antenna port information, at least one piece of antenna port mute pattern information, at least one piece of CSI-RS resource information and at least one piece of CSI reporting information.

The base station power-domain adaptive information represents at least one piece of power-domain information applied by the base station when saving energy based on the power-domain energy-saving technology. The at least one piece of power-domain information here includes at least one of: at least one piece of power-related information for an antenna port, at least one piece of power-related information for an antenna port muting pattern, at least one piece of power-related information for a CSI-RS resource, or at least one piece of power-related information for a CSI reporting.

The base station DTX/DRX adaptive information represents the DTX/DRX configuration information applied by the base station when saving energy based on the DTX/DRX energy-saving technology. The DTX/DRX configuration information here includes at least one of: an active period of DTX/DRX periodic data transmission, an inactive period without data transmission, or time position information for a start of DTX/DRX transmission.

The first signaling is a signaling indicating transmission of base station adaptive information. Specifically, indicating transmission of base station adaptive information may indicate a type of base station adaptive information being transmitted and/or received, an index of the base station adaptive information being transmitted and/or received, an occasion of the base station adaptive information being transmitted and/or received, i.e., validation time of the base station adaptive information, or a transmission configuration for transmitting and/or receiving the base station adaptive information, which is not limited in the embodiments of the present application.

The base station may transmit the first signaling based on a configuration of the first signaling. Accordingly, the terminal may receive the first signaling transmitted from the base station. The first signaling here may be a dynamic signaling, and the first information may include at least one of layer 1 signaling, DCI signaling, or MAC-CE signaling.

In an embodiment of the present application, the moment at which the base station transmits the first signaling is referred as the third moment.

S220: obtaining validation time of the base station adaptive information, the validation time including a second moment at which a terminal or the base station transmits and/or receives the base station adaptive information based on indication of the first signaling, the second moment being after the third moment.

Specifically, for the base station adaptive information indicated by transmitted first signaling, the base station may obtain the validation time of the base station adaptive information. Here, the validation time of the base station adaptive information is the time at which the base station adaptive information is allowed to be transmitted.

The validation time may be a specific moment, referred to herein as the second moment. That is, the base station adaptive information is validated at the second moment, and the base station and the terminal may transmit the base station adaptive information at the second moment. The second moment in the embodiment of the present application is the same as the second moment in the above embodiment, so that the validation time obtained by the base station and the terminal is consistent.

The validation time may also be a time window, such as first time window. Each moment in the first time window is a second moment that may be used to transmit and/or receive the base station adaptive information. That is, the base station adaptive information is validated within the first time window, and the base station and the terminal may transmit the base station adaptive information within the first time window. The first time window in the embodiment of the present application is the same time window as the first time window in the above embodiment, so that the validation time obtained by the base station and the terminal is consistent.

The validation time of the base station adaptive information must be later than the moment at which the base station transmits the first signaling indicating the transmission of the base station adaptive information. Thus, the second moment representing the validation time, or a start of the validation time, must be after the third moment.

Here, the validation time of the base station adaptive information may be the validation time calculated by the base station based on predefined rules, and then the base station configures the validation time to the terminal, or the base station indicates the information used to calculate the validation time to the terminal, so that the terminal calculates the validation time based on the information indicated by the base station, or the terminal also calculates the validation time based on the above-mentioned predefined rules. It is clear that the base station and the terminal use the same method to determine the validation time, that is, the validation time obtained by the base station and the terminal is the same.

S230: transmitting and/or receiving the base station adaptive information based on the validation time.

Specifically, after determining the validation time of the base station adaptive information, the base station may transmit and/or receive the base station adaptive information based on the validation time. In case that the validation time is represented as a second moment, the base station may transmit and/or receive the base station adaptive information at the second moment. In case that the validation time is represented as a time window, the base station may transmit and/or receive the base station adaptive information within the time window.

In the transmission method provided by the embodiments of the present application, a second moment for transmitting and/or receiving base station adaptive information based on a first signaling is configured to obtain the validation time of the base station adaptive information, and the base station adaptive information is transmitted based on the validation time, addressing the problem that the base station and the terminal have inconsistent understanding of the transmission time of energy-saving information which affects the transmission performance and energy-saving effect, and effectively ensuring transmission performance and energy-saving effect.

Based on any of above embodiments, the second moment includes at least one of following current candidate moments:
any current candidate moment, a maximum value of at least two current candidate moments, a minimum value of multiple current candidate moments, or a sum of multiple current candidate moments.

Here, the candidate moment is a moment after the first moment. The candidate moment may be a preconfigured moment, a moment obtained by postponing a preconfigured duration from the first moment, or a moment obtained by postponing a preconfigured duration starting from the third moment at which the base station transmits the first signaling. There may be multiple candidate moments. In case that there are multiple candidate moments, any one of the multiple candidate moments may be selected as the second moment, or any number of candidate moments may be selected from the multiple candidate moments, and the maximum, minimum, or sum of the multiple candidate moments may be determined as the second moment.

The second moment here may be a second moment calculated by the base station based on a predefined rule, and then the base station configures the second moment to the terminal, or the base station indicates the information used to calculate the second moment to the terminal, the terminal calculates the second moment based on the information indicated by the base station, or the terminal also calculates the second moment based on the above-mentioned predefined rules, which is not limited in the embodiments of the present application. It is clear that the base station and the terminal use the same method to determine the second moment, that is, the second moments obtained by the base station and the terminal are the same.

Based on any of above embodiments, the candidate moment includes at least one of:
a candidate moment after a first time constant;
a candidate moment at which a Nth first reference signal is received or transmitted, N being a natural number greater than or equal to 1;
a candidate moment at which Mth first information is received or transmitted, M being a natural number greater than or equal to 1;
a candidate moment at which hybrid automatic repeat request (HARQ) information of the first signaling is fed back;
a candidate moment at which acknowledgement character (ACK) information of the first signaling is fed back;
a candidate moment after a processing time of the first signaling;
a candidate moment after a first minimum duration during which the base station performs change based on the base station spatial-domain adaptive information;
a candidate moment after a second minimum duration during which the base station performs change based on the base station power-domain adaptive information;
a candidate moment after a third minimum duration during which the base station performs change based on the base station DTX/DRX adaptive information;
a candidate moment within a time window with a moment at which a second reference signal is transmitted and/or received being an end point;
a candidate moment at which Kth first information after a second reference signal is reported, K being a natural number greater than or equal to 1; or
a candidate moment after a processing delay for changing transmission configuration information.

Specifically, the first time constant may be a preconfigured time constant, for example, a time constant with a granularity of at least one of a symbol, a slot, a subframe, or a radio frame. The first time constant here may be expressed as a moment or as a duration. In case that the first time constant is expressed as a moment, a candidate moment after the first time constant, that is, a moment after the first time constant, is referred as the candidate moment. In case that the first time constant is expressed as a duration, a candidate moment after the first time constant, that is, a moment obtained by postponing the first time constant from the reference moment is determined as the candidate moment.

Here, the reference moment may be the first moment at which the terminal receives the first signaling, or the third moment the base station transmits the first signaling.

The first reference signal may include at least one of a channel state indicator-reference signal (CSI-RS), a tracking reference signal (TRS), phase-tracking reference signal (PTRS), a sounding reference signal (SRS), or a synchronization signal block (SSB). The candidate moment at which a Nth first reference signal is received or transmitted may be a moment at which the terminal receives the Nth first reference signal, accumulated since the reference moment, or the moment at which the base station transmits the Nth first reference signal, accumulated since the reference moment. Here, N is a natural number greater than or equal to 1.

The first information may include at least one of a channel state indicator (CSI), acknowledge character (ACK) information for the first signaling, or ACK/negative acknowledge character (NACK) information for the first signaling. The candidate moment at which Mth first information is received or transmitted may be a moment at which the terminal transmits the Mth first information, accumulated since the reference moment, or a moment at which the base station receives a Mth CSI, accumulated since the reference moment. Here, M is a natural number greater than or equal to 1.

The candidate moment at which hybrid automatic repeat request (HARQ) information is fed back may be a moment at which the terminal feeds back HARQ information for the first signaling after the reference moment.

The candidate moment at which the ACK information for the first signaling is fed back may be a moment at which the terminal feeds back the ACK for the first signaling after the reference moment.

The processing time of the first signaling refers to the delay incurred by the terminal processing the first signaling itself. Processing the first signaling here includes demodulation, decoding, and parsing. A candidate moment after the processing time of the first signaling, that is a moment obtained by postponing the reference moment by the processing time of the first signaling, is determined as the candidate moment.

In case that the base station adaptive information includes base station spatial-domain adaptive information, the minimum duration for the base station to change based on the base station spatial-domain adaptive information may be referred as the first minimum duration. Specifically, the first minimum duration here may be the minimum processing delay for the base station to perform antenna power-off and power-on operations based on the base station spatial-domain adaptive information. A candidate moment after the first minimum duration, that is a moment obtained by postponing the reference moment by the first minimum duration, is determined as the candidate moment.

In case that the base station adaptive information includes base station power-domain adaptive information, the minimum duration for the base station to change based on the base station power-domain adaptive information may be referred as the second minimum duration. Specifically, the second minimum duration here may be the minimum processing delay for the base station to change transmit power based on the base station power-domain adaptive information. A candidate moment after the second minimum duration, that is a moment obtained by postponing the reference moment by the second minimum duration, is determined as the candidate moment.

In case that the base station adaptive information includes base station DTX/DRX adaptive information, the minimum duration for the base station to change based on the base station DTX/DRX adaptive information may be referred as the third minimum duration. Specifically, the third minimum duration here may be the minimum processing delay for a base station to change DTX/DRX configuration information based on the base station DTX/DRX adaptive information. A candidate moment after the third minimum duration, that is a moment obtained by postponing the reference moment by the third minimum duration, is determined as the candidate moment.

The second reference signal may include at least one of a CSI-RS signal, an SRS signal, a PTRS signal, or a TRS signal at the first reference moment. The first reference moment may be a moment after the first moment, a moment after the third moment, or a moment before the second moment.

A time window with a moment of transmission and/or reception of the second reference signal as its end may be a time window starting at the reference moment and ending at a moment at which the base station transmits the second reference signal, or a time window starting at the reference moment and ending at a moment at which the base station receives the second reference signal. A candidate moment within a time window with the moment of transmission and/or reception of the second reference signal as its end, that is a moment within the time window, is determined as the candidate moment.

A candidate moment for reporting Kth first information after the second reference signal, that is a moment at which the terminal reports the Kth first information, accumulated since the second reference signal, is determined as the candidate moment. Here, K is a natural number greater than or equal to 1.

The transmission configuration information may include at least one of bandwidth partial (BWP), secondary cell (Scell), configured grant (CG), or semi-persistent scheduling (SPS). The processing delay for changing the transmission configuration information may include at least one of: a processing delay required for BWP switching/activation/deactivation, a processing delay required for Scell handover/activation/deactivation, a processing delay required for CG activation and/or deactivation, or a processing delay required for SPS activation and/or deactivation. A candidate moment after the processing delay for changing the transmission configuration information, that is a moment obtained by postponing the reference moment by the processing delay for changing the transmission configuration information, is determined as the candidate moment.

The method provided in the embodiments of present application encompasses various representations of candidate moments, based on which, the second moment and thus the validation time are determined, to avoid a situation where the first signaling is not received correctly or is received late due to a processing delay indicated by the first signaling, the conversion time of the base station energy-saving technology, and related delays, ensuring the reliability of the base station energy-saving technology.

Based on any of above embodiments, the validation time is a first time window with the second moment as a start.

Specifically, the validation time may be represented as a time window, which is referred to herein as the first time window. Here, the starting point of the first time window may be at least one of the second moments determined in the above embodiments.

Based on any of above embodiments, the first time window includes at least one of:
a time window for receiving or transmitting A first reference signals, A being a natural number greater than or equal to 1;
a time window for receiving or transmitting B pieces of first information, B being a natural number greater than or equal to 1; or
a time window for transmitting or receiving C pieces of first information after the second reference signal, C being a natural number greater than or equal to 1.

Specifically, the first reference signal may include at least one of a channel state indicator-reference signal (CSI-RS), a tracking reference signal (TRS), phase-tracking reference signal (PTRS), a sounding reference signal (SRS), or a synchronization signal block (SSB). The time window for receiving or transmitting A first reference signals may be a time window starting at the second moment and ending at a moment within a time period during which the terminal receives the A first reference signals. Alternatively, the time window for receiving or transmitting A first reference signals may be a time window starting at the second moment and ending at a moment within a time period during which the base station transmits the A first reference signals.

The first information may include at least one of a channel state indicator (CSI), ACK information for the first signaling, or ACK/NACK information for the first signaling. The time window for receiving or transmitting B pieces of first information may be a time window starting at the second moment and ending at the moment at which the terminal transmits the Bth first information. Alternatively, the time window for receiving or transmitting the B pieces of first information may be a time window starting at the second moment and ending at the moment at which the base station receives the Bth first information.

The second reference signal may include at least one of a CSI-RS signal, an SRS signal, a PTRS signal, or a TRS signal at the first reference moment. The first reference moment may be a moment after the first moment, a moment after the third moment, or a moment before the second moment. The time window for transmitting or receiving C pieces of first information after the second reference signal may be a time window starting at the second moment and ending at a moment within a time period during which the terminal transmits the C pieces of first information after the second reference signal. Alternatively, the time window for transmitting or receiving the C pieces of first information after the second reference signal may be a time window starting at the second moment and ending at a moment within a time period during which the base station receives the C pieces of first information after the second reference signal.

In the method provided in the embodiments of present application, various representations of the first time window are included and the validation time is determined based on the first time window to avoid a situation where the first signaling is not received correctly or is received late due to a processing delay indicated by the first signaling, the conversion time of the base station energy-saving technology, and related delays, ensuring the reliability of the base station energy-saving technology.

Based on any of above embodiments, the first time constant is a time constant with a granularity of at least one of a symbol, a slot, a subframe, or a radio frame;
the first reference signal is a channel state indicator-reference signal (CSI-RS);
the first information is a channel state indicator (CSI);
the second reference signal is a reference CSI-RS;
the transmission configuration information includes at least one of a bandwidth partial (BWP), a secondary cell (Scell), configured grant (CG), or semi-persistent scheduling (SPS).

Based on any of above embodiments, the method further includes:
transmitting a second signaling, the second signaling indicating changing the transmission configuration information;
the third moment being a moment at which the first signaling is transmitted based on unchanged transmission configuration information, and the candidate moment being a moment determined based on changed transmission configuration information.

Specifically, the base station may transmit the second signaling to the terminal for changing the transmission configuration information. Correspondingly, the terminal may receive the second signaling and, based on the second signaling, change the transmission configuration information for information transmission. The transmission configuration information here may include at least one of a BWP, Scell, CG, or SPS. Thus, the second signaling may be an indication signaling of BWP switching/activation/deactivation, Scell handover/activation/deactivation, CG activation/deactivation or SPS activation/deactivation, and includes at least one of:
an indication signaling of at least one of BWP switching, activation, or deactivation;
an indication signaling of at least one of Scell handover, activation, or deactivation;
an indication signaling of CG activation and/or deactivation; or
an indication signaling of SPS activation and/or deactivation.

After receiving the second signaling, the terminal may change the transmission configuration information based on the second signaling, for example, BWP switching/activation/deactivation, Scell handover/activation/deactivation, CG activation/deactivation or SPS activation/deactivation. Therefore, the transmission configuration information before handover/activation/deactivation is performed based on the second signaling may be referred as unchanged transmission configuration information, and the transmission configuration information after handover/activation/deactivation is performed based on the second signaling may be referred as changed transmission configuration information.

Considering a transmission order of the first signaling and the second signaling, i.e., the first signaling is transmitted before the second signaling, it may be determined that the base station transmits the first signaling based on unchanged transmission configuration information. Therefore, the third moment at which the base station transmits the first signaling is a moment at which the base station transmits the first signaling based on unchanged transmission configuration information.

In addition, the base station needs to transmit the base station adaptive information based on changed transmission configuration information. Therefore, the candidate moment at which the validation time is determined is a candidate moment determined based on changed transmission configuration information. For example, the candidate moment for receiving or transmitting the Nth first reference signal is a candidate moment for receiving or transmitting the Nth first reference signal based on changed transmission configuration information. For another example, the candidate moment for feeding back HARQ information for the first signaling is a candidate moment for feeding back HARQ information for the first signaling based on changed transmission configuration information.

In the method provided by the embodiments of the present application, validation time based on changed transmission configuration information is configured for the scenario in which the transmission configuration information is changed to avoid the problem of inconsistent understanding of the first signaling for energy-saving of the base station in case that information is transmitted based on changed transmission configuration information, improving the transmission performance of the terminal and further reducing the energy consumption of the base station.

Based on any of above embodiments, in case that the base station adaptive information includes the base station DTX/DRX adaptive information as well as the base station spatial-domain adaptive information and/or the base station power-domain adaptive information,
the validation time of the base station spatial-domain adaptive information and/or the base station power-domain adaptive information is determined based on the base station DTX/DRX adaptive information.

Specifically, the first signaling may indicate both base station DTX/DRX adaptive information and base station spatial-domain adaptive information, may indicate both base station DTX/DRX adaptive information and base station power-domain adaptive information, or may indicate both base station DTX/DRX adaptive information and base station spatial-domain adaptive information and base station power-domain adaptive information.

In case that the base station adaptive information indicated by the above-mentioned types of first signaling includes base station DTX/DRX adaptive information, validation time of the base station spatial-domain adaptive information and/or base station power-domain adaptive information is associated with DTX/DRX configuration information in the base station DTX/DRX adaptive information.

The DTX/DRX configuration information in the base station DTX/DRX adaptive information clearly distinguishes between an active period of DTX/DRX periodic data transmission and an inactive period without data transmission. Also, data transmission is performed between the base station and the terminal only during the active period, and not during the inactive period for a configuration based on DTX/DRX configuration information. Therefore, the base station and the terminal may only transmit the base station spatial-domain adaptive information and/or the base station power-domain adaptive information during the active period, and not transmit the base station spatial-domain adaptive information and/or the base station power-domain adaptive information during the inactive period.

Thus, in case that the base station DTX/DRX adaptive information is validated, the validation time of the base station spatial-domain adaptive information and/or base station power-domain adaptive information must fall within the active period of the DTX/DRX periodic data transmission determined based on the DTX/DRX configuration information.

In the method provided in the embodiments of the present application, validation time of base station spatial-domain adaptive information and/or base station power-domain adaptive information is configured within the validation time of the base station DTX/DRX adaptive information, to avoid the problem of unclear scope in case that the validation time is configured for different base station energy-saving schemes separately, which helps improve terminal transmission performance and reduce base station energy consumption.

Based on any of above embodiments, in case that the validation time of the base station spatial-domain adaptive information and/or the base station power-domain adaptive information falls within a DTX/DRX inactive period indicated by the base station DTX/DRX adaptive information, the validation time of the base station spatial-domain adaptive information and/or the base station power-domain adaptive information is adjusted by at least one of:
postponing the validation time of the base station spatial-domain adaptive information and/or the base station power-domain adaptive information to a starting time of next active period of the DTX/DRX;
terminating the validation time of the base station spatial-domain adaptive information and/or the base station power-domain adaptive information; or
suspending and postponing the validation time of the base station spatial-domain adaptive information and/or the base station power-domain adaptive information to a moment after a starting point of next active period of the DTX/DRX.

Specifically, within the validation time of the base station DTX/DRX adaptive information, in case that validation time of acquired base station spatial-domain adaptive information and/or base station power-domain adaptive information falls within an inactive period of DTX/DRX indicated by the base station DTX/DRX adaptive information, that is, the validation time of the base station spatial-domain adaptive information and/or base station power-domain adaptive information falls within an inactive period of DTX/DRX during which no data transmission is performed, which may be understood as a conflict between the validation time of the base station spatial-domain adaptive information and/or base station power-domain adaptive information and configuration of the base station DTX/DRX adaptive information, the validation time of the base station spatial-domain adaptive information and/or base station power-domain adaptive information needs to be adjusted so that the adjusted validation time falls within an active period of DTX/DRX.

Here, the adjustment method may include at least one of the following.

The validation time of the base station spatial-domain adaptive information and/or the base station power-domain adaptive information is postponed to a start of next active period of DTX/DRX. That is, in case that the validation time is the second moment, the second moment may be postponed, and the start of the next active period of DTX/DRX may be determined as the postponed second moment. Alternatively, in case that the validation time is the first time window, the overlap between the first time window and the inactive period may be postponed, and the start of the next active period of DTX/DRX may be determined as the start of the postponed overlap.

The validation time of the base station spatial-domain adaptive information and/or base station power-domain adaptive information is terminated. That is, in case that the validation time is the second moment, the second moment within the inactive period may be deleted. Alternatively, in case that the validation time is the first time window, the overlap between the first time window and the inactive period may be deleted.

The validation time of the base station spatial-domain adaptive information and/or base station power-domain adaptive information is suspended and postponed to a moment after the start of the next active period of the DTX/DRX. That is, in case that the validation time is the second moment, the second moment within the inactive period may be postponed by a preset duration so that the postponed second moment falls within the next active period. Alternatively, in case that the validation time is the first time window, the overlap between the first time window and the inactive period may be postponed by a preset duration so that the postponed overlap falls within the next active period.

Based on any of above embodiments, the first signaling is configured based on a radio resource control (RRC) signaling, and the first signaling is used to indicate an index of the base station adaptive information, or to indicate activation and/or deactivation of an index of the base station adaptive information.

Specifically, after transmitting the first signaling, the base station may configure the first signaling to the terminal. Further, the base station may configure the first signaling to indicate at least one of base station spatial-domain adaptive information, base station power-domain adaptive information, or base station DTX/DRX adaptive information.

Further, the base station may configure the first signaling based on RRC signaling. Specifically, the first signaling may be configured based on RRC signaling to indicate at least one of the index of the base station spatial-domain adaptive information, the index of the base station power-domain adaptive information, or the index of the base station DTX/DRX adaptive information. The index here may be an RRC index.

The base station may also configure, based on RRC signaling, the first signaling to activate and/or deactivate at least one of the index of the base station spatial-domain adaptive information, the index of the base station power-domain adaptive information, or the index of the base station DTX/DRX adaptive information. The index here may be an RRC index.

In an embodiment, the base station may also, based on the RRC signaling configuration, activate or indicate at least one of the index of the base station spatial-domain adaptive information, the index of the base station power-domain adaptive information, or the index of the base station DTX/DRX adaptive information through a MAC-CE.

In an embodiment, the base station may also configure the first signaling activation based on RRC signaling. Upon activation, the base station semi-persistently transmits at least one of the following information: base station spatial-domain adaptive information or base station power-domain adaptive information. Alternatively, the terminal semi-persistently transmits at least one of the following information: base station spatial-domain adaptive information CSI or base station power-domain adaptive information CSI.

Based on any of the above embodiments, the base station spatial-domain adaptive information includes at least one piece of spatial-domain information. The at least one piece of spatial-domain information includes at least one following: at least one piece of antenna port information, at least one piece of antenna port muting pattern information, at least one piece of CSI-RS resource information, or at least one piece of CSI reporting information.

The CSI-RS resource information includes at least one of: antenna port configuration for CSI-RS transmission, time-domain resource configuration, and frequency-domain resource configuration information.

The CSI reporting information includes channel state information, specifically including at least one of: wideband precoding matrix indicator (PMI), rank indicator (RI), layer indicator (LI), wideband channel quality indicator (CQI), subband PMI, subband CQI, CSI-resource indicator (CRI), reference signal received power (RSRP), reference signal received quality (RSRQ), received signal strength indicator (RSSI), and signal interference noise ratio (SINR).

The base station power-domain adaptive information includes at least one piece of power-domain information. The at least one piece of power-domain information includes at least one of: at least one piece of power-related information for an antenna port, at least one piece of power-related information for an antenna port muting pattern, at least one piece of power-related information for a CSI-RS resource, or at least one piece of power-related information for CSI reporting.

The base station DTX/DRX adaptive information includes DTX/DRX configuration information, which includes at least one of: activation time for DTX/DRX periodic data transmission, inactivation time without data transmission, or time location information for the start of DTX/DRX transmission.

The data transmission includes at least one of DL transmission or UL transmission, including at least one of transmission or reception by the base station, and further includes at least one of: PDCCH transmission, PDSCH transmission, CSI-RS transmission, PUCCH transmission, PUSCH transmission, SRS transmission, RACH transmission, or paging transmission.

Based on any of the above embodiments, embodiments of the present application provide a transmission method, in which the base station indicates at least one of the base station spatial-domain adaptive information, the base station power-domain adaptive information, or the base station DTX/DRX adaptive information through a first signaling, and performs the transmission of at least one of the base station spatial-domain adaptive information, the base station power-domain adaptive information, or the base station DTX/DRX adaptive information at the validation time.

On the base station side:
At step 1, the base station configures the first signaling to indicate at least one of base station spatial-domain adaptive information, base station power-domain adaptive information, or base station DTX/DRX adaptive information.

Further, in case that the first signaling is DCI, it may include at least one of: Cell-specific DCI, UE-group DCI, UE-specific DCI. The DCI may be DL scheduling DCI or non-scheduling DCI. As an example, the first signaling may be base station energy-saving DCI or slot configuration DCI.

As an example, the indication content of the first signaling may include transmitting and/or receiving at least one of base station spatial-domain adaptive information, base station power-domain adaptive information, or base station DTX/DRX adaptive information, for example, the indication content may include at least one of following items.

Indication content 1: the first signaling indicates CSI-RS resources, where the CSI-RS resources include at least one of: at least one piece of spatial-domain information or at least one piece of power-domain information, as examples:
1) CSI-RS resource 1 identifies base station spatial-domain adaptive information 1, and CSI-RS resource 2 identifies base station spatial-domain adaptive information 2, for example, base station spatial-domain adaptive information 1 may be the CSI-RS resource corresponding to antenna port 1, the CSI-RS resource corresponding to antenna TXRU configuration 1, or the CSI-RS resource corresponding to antenna number configuration 1;
2) CSI-RS resource 1 identifies base station power-domain adaptive information 1, and CSI-RS resource 2 identifies base station power-domain adaptive information 2;
3) CSI-RS resource 1 identifies base station spatial-domain adaptive information 1 and base station spatial-domain adaptive information 2;
4) CSI-RS resource 1 identifies base station power-domain adaptive information 1 and base station power-domain adaptive information 2;
5) CSI-RS resource 1 identifies base station spatial-domain adaptive information 1 and base station power-domain adaptive information 1, as well as base station spatial-domain adaptive information 2 and base station power-domain adaptive information 2;

Indication content 2: the first signaling indicates CSI reporting information, where the CSI reporting information includes at least one of following information: at least one piece of CSI information of spatial-domain information or at least one piece of CSI information of power-domain information, as examples:
6) CSI report 1 identifies base station spatial-domain adaptive information 1, and CSI report 2 identifies base station spatial-domain adaptive information 2;
7) CSI report 1 identifies base station power-domain adaptive information 1, and CSI report 2 identifies base station power-domain adaptive information 2;
8) CSI report 1 identifies base station spatial-domain adaptive information 1 and base station spatial-domain adaptive information 2;
9) CSI report 1 identifies base station power-domain adaptive information 1 and base station power-domain adaptive information 2;
10) CSI report 1 identifies base station spatial-domain adaptive information 1 and base station power-domain adaptive information 1, as well as base station spatial-domain adaptive information 2 and base station power-domain adaptive information 2.

At step 2, the base station configures validation time of at least one of base station spatial-domain adaptive information, base station power-domain adaptive information, or base station DTX/DRX adaptive information indicated by the first signaling.

The validation time may be configured via first signaling or a RRC signaling, or predefined by the base station.

In case that the validation time is configured via first signaling, the validation time may be indicated in the first signaling or in other first signaling, such as scheduling DCI or MAC-CE.

In case that the validation time is configured via RRC signaling or predefined by the base station, the validation time may be determined by a configuration rule or a configuration parameter.

The validation time here is the second moment, or a first time window starting at the second moment.

The second moment may be identified as at least one of following candidate moments, or the minimum of following multiple candidate moments, or the maximum of following multiple candidate moments, or the sum of following multiple candidate moments:
1) a moment at which the terminal receives a CSI-RS after the first moment;
2) a moment at which the terminal feeds back a CSI after the first moment;
3) a moment postponing the first moment by the processing time Z of the first signaling;
4) a moment at which the terminal feeds back HARQ information of the first signaling;
5) a moment postponing the first moment by a first minimum duration Y1 during which the base station spatial-domain adaptive information changes;
6) a moment postponing the first moment by a second minimum duration Y2 during which the base station power-domain adaptive information changes;
7) a moment postponing the first moment by a third minimum duration Y3 during which the base station DTX/DRX adaptive information changes;
8) a moment postponing the first moment by the maximum of at least one of Y1, Y2, and Y3;
9) a moment within the time window where the terminal receives A CSI-RSs after the first moment; A is greater than or equal to 1;
10) a moment within the time window where the terminal sends B CSIs after the first moment; B is greater than or equal to 1;
11) a minimum value of the time windows during which the terminal feeds back B CSIs after the first moment;
12) a moment at which the terminal receives the Nth CSI-RS after the first moment; N is greater than or equal to 1;
13) a moment at which the terminal transmits the Mth CSI after the first moment; M is greater than or equal to 1;
14) a minimum value of the moment at which the terminal feeds back the Mth CSI after the first moment;
15) a moment at which the CSI-RS resource for the base station spatial-domain adaptive information and/or base station power-domain adaptive information is after the reference CSI-RS reference resource after the first moment; and the CSI is not updated at the K1th CSI reporting moment after the CSI-RS reference resource; where K1 is greater than or equal to 1;
16) a moment at which the CSI-RS resource for the base station spatial-domain adaptive information and/or base station power-domain adaptive information is before the reference CSI-RS reference resource after the first moment; and the CSI is updated at the K2th CSI reporting moment after the CSI-RS reference resource; where K2 is greater than K1; K2 is greater than or equal to 2;
17) a moment at which the CSI-RS resource for the base station spatial-domain adaptive information and/or the base station power-domain adaptive information is after the reference CSI-RS reference resource after the first moment; and, the CSI is not updated at the K1th CSI reporting moment after the CSI-RS reference resource; K1 is greater than or equal to 1; the CSI is updated at the K2th CSI reporting moment; where K2 is greater than K1; K2 is greater than or equal to 2;
18) a moment at which the base station transmits the CSI-RS after the third moment;
19) a moment at which the base station receives the CSI after the third moment;
20) a moment postponing the third moment by the processing time Z of the first signaling;
21) a moment at which the base station receives the HARQ of the dynamic signaling after the third moment;
22) a moment postponing the third moment by the first minimum duration Y1 during which the base station spatial-domain adaptive information changes;
23) a moment postponing the third moment by the second minimum duration Y2 during which the base station power-domain adaptive information changes;
24) a moment postponing the third moment by the second minimum duration Y3 during which the base station DTX/DRX adaptive information changes;
25) a moment within the time window during which the base station transmits A CSI-RSs after the third moment;
26) a moment within the time window during which the base station transmit B CSIs after the third moment;
27) a minimum value within the time windows during which the base station feeds back B CSIs after the third moment;
28) a moment at which the base station transmits the Nth CSI-RS after the third moment;
29) a moment at which the base station receives the Mth CSI after the third moment;
30) a minimum value of the moment at which the base station receives the Mth CSI after the third moment;
31) a moment at which the CSI-RS resource for the base station spatial-domain adaptive information and/or base station power-domain adaptive information is after the reference CSI-RS reference resource after the third moment; and the CSI is not updated at the K1th CSI reporting moment after the CSI-RS reference resource; where K1 is greater than or equal to 1;
32) a moment at which the CSI-RS resource for the base station spatial-domain adaptive information and/or base station power-domain adaptive information is before the reference CSI-RS reference resource after the third moment; and the CSI is updated at the K2th CSI reporting moment after the CSI-RS reference resource; where K2 is greater than K1; K2 is greater than or equal to 2;
33) a moment at which the CSI-RS resource for the base station spatial-domain adaptive information and/or the base station power-domain adaptive information is after the reference CSI-RS reference resource after the third moment; and, the CSI is not updated at the K1th CSI reporting moment after the CSI-RS reference resource; where K1 is greater than or equal to 1; the CSI is updated at the K2th CSI reporting moment; K2 is greater than K1; K2 is greater than or equal to 2.

At step 3: the base station transmits a first signaling.

Specifically, the base station transmits the first signaling based on the configuration of the first signaling.

At step 4: the base station transmits and/or receives at least one of base station spatial-domain adaptive information, base station power-domain adaptive information, or base station DTX/DRX adaptive information based on the first dynamic signaling.

On the terminal side:
At step 1, a terminal receives the first signaling configured by the base station, the first signaling indicating at least one of base station spatial-domain adaptive information, base station power-domain adaptive information, or base station DTX/DRX adaptive information.

At step 2: the terminal obtains the validation time of the first signaling configured by the base station.

The validation time here may be the validation time indicated by the base station, the validation time calculated by the terminal based on the information indicated by the base station, or the validation time calculated by the terminal based on predefined rules.

At step 3: the terminal transmits HARQ information;
Based on the configuration of the validation time of the first signaling, the terminal may feed back and report the HARQ information based on the reception of the first signaling.

It should be noted that step 3 here is optional and may be performed after step 2, or step 4 may be performed directly.

At step 4: the terminal receives and/or transmits at least one of the base station spatial-domain adaptive information, the base station power-domain adaptive information, or the base station DTX/DRX adaptive information based on the validation time.

For example, the terminal may perform at least one of: receiving CSI-RS, reporting CSI, and transmitting and/or receiving during the base station DTX/DRX period.

The method provided in the embodiments of the present application uses first signaling to indicate at least one of base station spatial-domain adaptive information, base station power-domain adaptive information, or base station DTX/DRX adaptive information, enabling the base station to achieve energy-saving transmission. Furthermore, to ensure transmission performance, the first signaling is configured with validation time, so that the terminal transmits and/or receives based on an indication of the first signaling from the base station after the validation time, to ensure terminal transmission performance and avoid incorrect or delayed reception of dynamic signaling due to a processing delay indicated by dynamic signaling, a base station energy-saving technology transition time, and related delays, avoiding inconsistent understanding of the base station energy-saving information by the base station and the terminal.

Based on any of the above embodiments, a transmission method includes following steps:

On the base station side:

At step 1: a base station configures a first signaling to indicate at least one of base station spatial-domain adaptive information, base station power-domain adaptive information, or base station DTX/DRX adaptive information, and transmits the first signaling.

At step 2: the base station transmits a second signaling, where the second signaling may be an indication signaling of BWP switching/activation/deactivation, Scell handover/activation/deactivation, CG activation/deactivation or SPS activation/deactivation.

Here, the second signaling includes at least one of:
an indication signaling of at least one of BWP switching, activation, or deactivation;
an indication signaling of at least one of Scell handover, activation, or deactivation;
an indication signaling of CG activation and/or deactivation; or
an indication signaling of SPS activation and/or deactivation.

At a step 3: the base station configures validation time of the first signaling of the switched BWP/ handed over Scell/ activated CG/ activated SPS.

The validation time here may be the second moment, or the first time window starting at the second moment. The second moment is obtained in the same manner as in the above embodiment. In addition, the second moment may further include at least one of following, or the minimum of at least two of following, or the maximum of at least two of following, or the sum of at least two of following:
1) the following candidate moments determined based on the BWP/Scell/CG/SPS after change after a moment at which the terminal receives the first signaling based on the BWP/Scell/CG/SPS before change:
   - same as the candidate moments shown in the above embodiments;
   - further includes a moment postponing the moment the terminal receives the first signaling based on the unchanged BWP/Scell/CG/SPS by the BWP switching/activation/deactivation time, the Scell handover/activation/deactivation time, the CG activation and/or deactivation time, or the SPS activation and/or deactivation time;
2) the following candidate moments determined based on the changed BWP/Scell/CG/SPS after a moment at which the base station transmits the first signaling based on unchanged BWP/Scell/CG/SPS:
   - same as the candidate moments shown in the above embodiments;
   - further includes a moment postponing the moment the base station transmits the first signaling based on the unchanged BWP/Scell/CG/SPS by the BWP switching/activation/deactivation time, the Scell handover/activation/deactivation time, the CG activation and/or deactivation time, or the SPS activation and/or deactivation time;
3) the changed BWP/Scell/CG/SPS transmits and/or receives at least one of base station spatial-domain adaptive information, base station power-domain adaptive information, or base station DTX/DRX adaptive information based on the default configuration on the changed BWP/Scell/CG/SPS, before receiving the first signaling indication of at least one of the base station spatial-domain adaptive information, the base station power-domain adaptive information, or the base station DTX/DRX adaptive information on the activated BWP/Scell/CG/SPS.

At step 4: the base station transmits and/or receives at least one of base station spatial-domain adaptive information, base station power-domain adaptive information, or base station DTX/DRX adaptive information based on the first signaling.

On the terminal side:
At step 1: a terminal receives the first signaling configured by the base station, the first signaling indicating at least one of base station spatial-domain adaptive information, base station power-domain adaptive information, or base station DTX/DRX adaptive information.

At step 2: the terminal receives the second signaling transmitted from the base station, where the second signaling may be an indication signaling of BWP switching or activation or deactivation/Scell handover or activation or deactivation/CG activation or deactivation/SPS activation or deactivation.

At step 3: the terminal obtains validation time of the first signaling of the BWP/Scell/CG/SPS after handover or activation configured by the base station.

At step 4, the terminal transmits and/or receives at least one of base station spatial-domain adaptive information, base station power-domain adaptive information, or base station DTX/DRX adaptive information based on the first signaling.

In the method provided in the embodiments of the present application, the first signaling is used to indicate at least one of base station spatial-domain adaptive information, base station power-domain adaptive information, or base station DTX/DRX adaptive information, enabling the base station to achieve energy-saving transmission. Furthermore, to ensure transmission performance, the first signaling is configured with validation time, so that the terminal transmits and/or receives based on an indication of the first signaling from the base station after the validation time, to ensure terminal transmission performance and avoid incorrect or delayed reception of dynamic signaling due to a processing delay indicated by dynamic signaling, a base station energy-saving technology transition time, and related delays, avoiding inconsistent understanding of the base station energy-saving information by the base station and the terminal.

Further, in scenarios involving BWP switching/activation/deactivation, Scell handover/activation/deactivation, CG activation/deactivation or SPS activation/deactivation, validation time based on the switched or activated BWP/ handed over or activated SCell/activated CG/ activated SPS is configured, to avoid inconsistent understanding of base station energy-saving dynamic signaling on the new BWP/SCell/CG/SPS, improving terminal transmission performance and further reducing base station energy consumption.

Based on any of the above embodiments, embodiments of the present application provide a transmission method, in which the first signaling indicates base station DTX/DRX adaptive information, and also indicates base station spatial-domain adaptive information and/or base station power-domain adaptive information.

On the base station side:
At step 1: the base station configures validation time of the first signaling.

Further, the first signaling indicates DTX/DRX adjustment information and/or activation/deactivation at a first moment, with the validation time of a second moment. At the second moment and thereafter, the first signaling indicates spatial-domain adaptive information and/or power-domain adaptive information during the DTX/DRX activation period of the base station.

If the validation time of the spatial-domain adaptive information and/or power-domain adaptive information indicated by the first signaling at the second moment and thereafter falls during the DTX/DRX activation period of the base station, the validation time of the indicated spatial-domain adaptive information and/or power-domain adaptive information includes at least one of:
the validation time is postponed to the start of the next DTX/DRX activation period of the base station;
the validation time is terminated; or
the validation time is suspended and postponed to a moment after the next DTX/DRX activation period of the base station.

At step 2: the base station transmits the first signaling, where the first signaling indicates base station DTX/DRX adaptive information, and also indicates base station spatial-domain adaptive information and/or base station power-domain adaptive information.

At step 3: the base station transmits and/or receives at least one of base station spatial-domain adaptive information, base station power-domain adaptive information, or base station DTX/DRX adaptive information based on the indication of the first signaling.

On the terminal side:
At step 1: a terminal receives the validation time of the first signaling configured by the base station.

At step 2: the terminal receives the first signaling transmitted from the base station, where the first signaling indicates base station DTX/DRX adaptive information, and also indicates the base station spatial-domain adaptive information and/or the base station power-domain adaptive information.

At step 3: the terminal transmits and/or receives at least one of the base station spatial-domain adaptive information, the base station power-domain adaptive information, or the base station DTX/DRX adaptive information based on the indication of received dynamic signaling.

In the method provided in the embodiments of the present application, the first signaling is used to indicate at least one of base station spatial-domain adaptive information, base station power-domain adaptive information, or base station DTX/DRX adaptive information, enabling the base station to achieve energy-saving transmission. Furthermore, to ensure transmission performance, the first signaling is configured with validation time, so that the terminal transmits and/or receives based on an indication of the first signaling from the base station after the validation time, to ensure terminal transmission performance and avoid incorrect or delayed reception of dynamic signaling due to a processing delay indicated by dynamic signaling, a base station energy-saving technology transition time, and related delays, avoiding inconsistent understanding of the base station energy-saving information by the base station and the terminal.

Further, during a period during which the base station DTX/DRX configuration is effective, the validation time of the base station spatial-domain adaptive information and/or the base station power-domain adaptive information is configured, to avoid the problem of unclear scope of the validation time of different base station energy-saving schemes configured with different validation times, increasing the performance of the terminal and reducing the energy consumption of the base station.

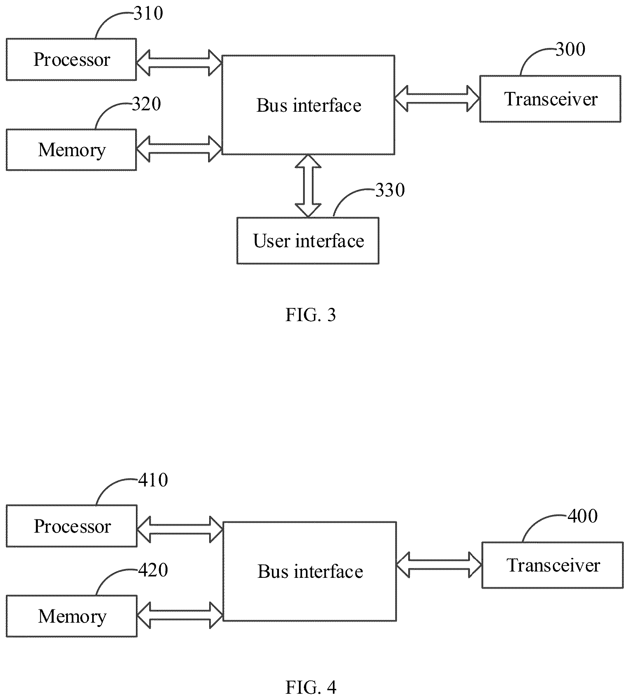

Based on any of the above embodiments, FIG. 3 is a first schematic diagram of a transmission apparatus according to an embodiment of the present application. As shown in FIG. 3, the transmission apparatus includes a memory 320, a transceiver 300, and a processor 310.

The memory 320 is used for storing a computer program, the transceiver 300 is used for receiving and transmitting data under control of the processor 310, and the processor 310 is used for reading the computer program in the memory 320 and performing following operations:
receiving a first signaling at a first moment, the first signaling indicating transmission of base station adaptive information, the base station adaptive information including at least one of base station spatial-domain adaptive information, base station power-domain adaptive information, or base station discontinuous transmission (DTX)/discontinuous receiving (DRX) adaptive information;
obtaining validation time of the base station adaptive information, the validation time including a second moment at which the base station adaptive information is transmitted and/or received based on the first signaling, the second moment being after the first moment; and
transmitting and/or receiving the base station adaptive information based on the validation time.

Specifically, the transceiver 300 is used to receive and transmit data under control of the processor 310.

In FIG. 3, a bus architecture may include any number of interconnected buses and bridges, which are linked together through various circuits of one or more processors represented by processor 310 and one or more memories represented by the memory 320. The bus architecture may also link together various other circuits, such as peripherals, voltage regulators, and power management circuits. These are well known in the art and therefore will not be described further in the present application. The bus interface provides an interface. The transceiver 300 may be multiple elements, i.e., including a transmitter and a receiver, units for providing communication with various other devices over transmission media including wireless channels, wired channels, fiber optic cables, and the like. For different user equipment, the user interface 330 may also be an interface capable of externally or internally connecting the required equipment, and the connected equipment includes, but not limited to, a keypad, a display, a speaker, a microphone, a joystick, and the like.

The processor 310 is responsible for managing the bus architecture and general processing, and the memory 320 may store data used by the processor 310 when performing operations.

The processor 310 may be a central processing unit (CPU), an application specific integrated circuit (ASIC), a field-programmable gate array (FPGA), or a complex programmable logic device (CPLD), and the processor may also use a multi-core architecture.

The processor is configured to execute any of the methods provided by the embodiments of the present application according to the obtained executable instructions by calling the computer program stored in the memory. The processor and memory may also be physically separate.

In an embodiment, the second moment includes at least one of:
any candidate moment, a maximum value of multiple candidate moments, a minimum value of multiple candidate moments, or a sum of multiple candidate moments.

In an embodiment, the candidate moment includes at least one of:
a candidate moment after a first time constant;
a candidate moment at which a Nth first reference signal is received or transmitted, N being a natural number greater than or equal to 1;
a candidate moment at which Mth first information is received or transmitted, M being a natural number greater than or equal to 1;
a candidate moment at which hybrid automatic repeat request (HARQ) information of the first signaling is fed back;
a candidate moment at which acknowledgement character (ACK) information of the first signaling is fed back;
a candidate moment after a processing time of the first signaling;
a candidate moment after a first minimum duration of change based on the base station spatial-domain adaptive information;
a candidate moment after a second minimum duration of change based on the base station power-domain adaptive information;
a candidate moment after a third minimum duration of change based on the base station DTX/DRX adaptive information;
a candidate moment within a time window with a moment at which a second reference signal is transmitted and/or received being an end point;
a candidate moment at which Kth first information after a second reference signal is reported, K being a natural number greater than or equal to 1; or
a candidate moment after a processing delay for changing transmission configuration information.

In an embodiment, the validation time is a first time window starting from the second moment.

In an embodiment, the first time window includes at least one of:
a time window for receiving or transmitting A first reference signals, A being a natural number greater than or equal to 1;
a time window for receiving or transmitting B pieces of first information, B being a natural number greater than or equal to 1; or
a time window for transmitting or receiving C pieces of first information after the second reference signal, C being a natural number greater than or equal to 1.

In an embodiment, the first time constant is a time constant with a granularity of at least one of a symbol, a slot, a subframe, or a radio frame;
the first reference signal is a channel state indicator-reference signal (CSI-RS);
the first information is a channel state indicator (CSI);
the second reference signal is a reference CSI-RS;
the transmission configuration information includes at least one of a bandwidth partial (BWP), a secondary cell (Scell), configured grant (CG), or semi-persistent scheduling (SPS).

In an embodiment, the operations further include:
receiving a second signaling, and changing the transmission configuration information based on the second signaling;
the first moment being a moment at which the first signaling is received based on unchanged transmission configuration information, and the candidate moment being a moment determined based on changed transmission configuration information.

In an embodiment, in case that the base station adaptive information includes the base station DTX/DRX adaptive information as well as the base station spatial-domain adaptive information and/or the base station power-domain adaptive information,

the validation time of the base station spatial-domain adaptive information and/or the base station power-domain adaptive information is determined based on the base station DTX/DRX adaptive information.

In an embodiment, in case that the validation time of the base station spatial-domain adaptive information and/or the base station power-domain adaptive information falls within a DTX/DRX inactive period indicated by the base station DTX/DRX adaptive information, the validation time of the base station spatial-domain adaptive information and/or the base station power-domain adaptive information is adjusted by at least one of:
postponing the validation time of the base station spatial-domain adaptive information and/or the base station power-domain adaptive information to a start of next active period of the DTX/DRX;
terminating the validation time of the base station spatial-domain adaptive information and/or the base station power-domain adaptive information; or
suspending and postponing the validation time of the base station spatial-domain adaptive information and/or the base station power-domain adaptive information to a moment after a start of next active period of the DTX/DRX.

In an embodiment, the first signaling is configured based on a radio resource control (RRC) signaling, and the first signaling is used to indicate an index of the base station adaptive information, or to indicate activation and/or deactivation of an index of the base station adaptive information.

In an embodiment, the base station spatial-domain adaptive information includes at least one piece of spatial-domain information; the at least one piece of spatial-domain information includes at least one of: at least one piece of antenna port information, at least one piece of antenna port muting pattern information, at least one piece of CSI-RS resource information, or at least one piece of CSI reporting information; and/or
the base station power-domain adaptive information includes at least one piece of power-domain information; the at least one piece of power-domain information includes at least one of: at least one piece of power-related information for an antenna port, at least one piece of power-related information for an antenna port muting pattern, at least one piece of power-related information for a CSI-RS resource, or at least one piece of power-related information for a CSI reporting; and/or
the base station DTX/DRX adaptive information includes DTX/DRX configuration information, the DTX/DRX configuration information including at least one of: an active period of DTX/DRX periodic data transmission, an inactive period without data transmission, or time position information for a start of DTX/DRX transmission.

It should be noted here that the transmission configuration provided in the embodiments of the present application may implement all the method steps implemented by the method embodiments in which the execution subject is the terminal, and may achieve the same effects. The same parts and beneficial effects in the embodiments as those in the method embodiments are not described in detail.

Based on any of above embodiments, FIG. 4 is a second schematic diagram of a transmission apparatus according to an embodiment of the present application. As shown in FIG. 4, the base station includes a memory 420, a transceiver 400 and a processor 410.

The memory 420 is used for storing a computer program, the transceiver 400 is used for receiving and transmitting data under control of the processor, and the processor 410 is used for reading the computer program in the memory and performing following operations:
transmitting a first signaling at a third moment, the first signaling indicating transmission of base station adaptive information, the base station adaptive information including at least one of base station spatial-domain adaptive information, base station power-domain adaptive information, or base station discontinuous transmission (DTX)/discontinuous reception (DRX) adaptive information;
obtaining validation time of the base station adaptive information, the validation time including a second moment at which the base station adaptive information is transmitted and/or received based on the first signaling, the second moment being after the third moment; and
transmitting and/or receiving the base station adaptive information based on the validation time.

In FIG. 4, a bus architecture may include any number of interconnected buses and bridges, which are linked together through various circuits of one or more processors represented by processor 410 and one or more memories represented by the memory 420. The bus architecture may also link together various other circuits, such as peripherals, voltage regulators, and power management circuits. These are well known in the art and therefore will not be described further in the present application. The bus interface provides an interface. The transceiver 400 may be multiple elements, i.e., including a transmitter and a receiver, units for providing communication with various other devices over transmission media including wireless channels, wired channels, fiber optic cables, and the like.

The processor 410 is responsible for managing the bus architecture and general processing, and the memory 420 may store data used by the processor 410 when performing operations.

The processor 410 may be a central processing unit (CPU), an application specific integrated circuit (ASIC), a field-programmable gate array (FPGA), or a complex programmable logic device (CPLD), and the processor may also use a multi-core architecture.

The processor is configured to execute any of the methods provided by the embodiments of the present application according to the obtained executable instructions by calling the computer program stored in the memory. The processor and memory may also be physically separate.

In an embodiment, the second moment includes at least one of:
any candidate moment, a maximum value of multiple candidate moments, a minimum value of multiple candidate moments, or a sum of multiple candidate moments.

In an embodiment, the candidate moment includes at least one of:
a candidate moment after a first time constant;
a candidate moment at which a Nth first reference signal is received or transmitted, N being a natural number greater than or equal to 1;
a candidate moment at which Mth first information is received or transmitted, M being a natural number greater than or equal to 1;
a candidate moment at which hybrid automatic repeat request (HARQ) information of the first signaling is fed back;
a candidate moment at which acknowledgement character (ACK) information of the first signaling is fed back;
a candidate moment after a processing time of the first signaling;
a candidate moment after a first minimum duration of change based on the base station spatial-domain adaptive information;
a candidate moment after a second minimum duration of change based on the base station power-domain adaptive information;
a candidate moment after a third minimum duration of change based on the base station DTX/DRX adaptive information;
a candidate moment within a time window with a moment at which a second reference signal is transmitted and/or received being an end point;
a candidate moment at which Kth first information after a second reference signal is reported, K being a natural number greater than or equal to 1; or
a candidate moment after a processing delay for changing transmission configuration information.

In an embodiment, the validation time is a first time window starting from the second moment.

In an embodiment, the first time window includes at least one of:
a time window for receiving or transmitting A first reference signals, A being a natural number greater than or equal to 1;
a time window for receiving or transmitting B pieces of first information, B being a natural number greater than or equal to 1; or
a time window for transmitting or receiving C pieces of first information after the second reference signal, C being a natural number greater than or equal to 1.

In an embodiment, the first time constant is a time constant with a granularity of at least one of a symbol, a slot, a subframe, or a radio frame;
the first reference signal is a channel state indicator-reference signal (CSI-RS);
the first information is a channel state indicator (CSI);
the second reference signal is a reference CSI-RS;
the transmission configuration information includes at least one of a bandwidth partial (BWP), a secondary cell (Scell), configured grant (CG), or semi-persistent scheduling (SPS).

In an embodiment, the operations further include:
transmitting a second signaling, the second signaling indicating changing the transmission configuration information;
the third moment being a moment at which the first signaling is transmitted based on unchanged transmission configuration information, and the candidate moment being a moment determined based on changed transmission configuration information.

In an embodiment, according to the transmission method of an embodiment of the present application, in case that the base station adaptive information includes the base station DTX/DRX adaptive information as well as the base station spatial-domain adaptive information and/or the base station power-domain adaptive information,
the validation time of the base station spatial-domain adaptive information and/or the base station power-domain adaptive information is determined based on the base station DTX/DRX adaptive information.

In an embodiment, in case that the validation time of the base station spatial-domain adaptive information and/or the base station power-domain adaptive information falls within a DTX/DRX inactive period indicated by the base station DTX/DRX adaptive information, the validation time of the base station spatial-domain adaptive information and/or the base station power-domain adaptive information is adjusted by at least one of:
postponing the validation time of the base station spatial-domain adaptive information and/or the base station power-domain adaptive information to a starting time of next active period of the DTX/DRX;
terminating the validation time of the base station spatial-domain adaptive information and/or the base station power-domain adaptive information; or
suspending and postponing the validation time of the base station spatial-domain adaptive information and/or the base station power-domain adaptive information to a moment after a start of next active period of the DTX/DRX.

In an embodiment, the first signaling is configured based on a radio resource control (RRC) signaling, and the first signaling is used to indicate an index of the base station adaptive information, or to indicate activation and/or deactivation of an index of the base station adaptive information.

In an embodiment, the base station spatial-domain adaptive information includes at least one piece of spatial-domain information; the at least one piece of spatial-domain information includes at least one of: at least one piece of antenna port information, at least one piece of antenna port muting pattern information, at least one piece of CSI-RS resource information, or at least one piece of CSI reporting information; and/or
the base station power-domain adaptive information includes at least one piece of power-domain information, the at least one piece of power-domain information includes at least one of: at least one piece of power-related information for an antenna port, at least one piece of power-related information for an antenna port muting pattern, at least one piece of power-related information for a CSI-RS resource, or at least one piece of power-related information for a CSI reporting; and/or
the base station DTX/DRX adaptive information includes DTX/DRX configuration information, the DTX/DRX configuration information including at least one of: an active period of DTX/DRX periodic data transmission, an inactive period without data transmission, or time position information for a start of DTX/DRX transmission.

It should be noted here that the transmission apparatus provided in the embodiments of the present application may implement all the method steps implemented by the method embodiments in which the execution subject is the base station, and may achieve the same effects. The same parts and beneficial effects in the embodiments as those in the method embodiments are not described in detail.

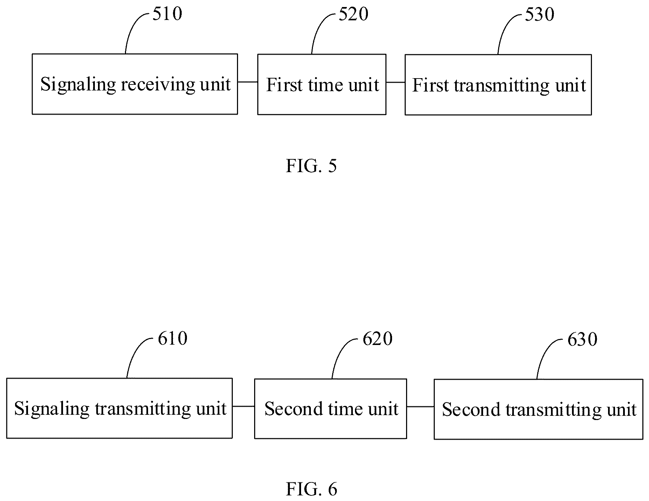

FIG. 5 is a third schematic diagram of a transmission apparatus according to an embodiment of the present application. As shown in FIG. 5, the transmission apparatus including:
a signaling receiving unit 510, used for receiving a first signaling at a first moment, the first signaling indicating transmission of base station adaptive information, the base station adaptive information including at least one of base station spatial-domain adaptive information, base station power-domain adaptive information, or base station discontinuous transmission (DTX)/discontinuous receiving (DRX) adaptive information;
a first time unit 520, used for obtaining validation time of the base station adaptive information, the validation time including a second moment at which the base station adaptive information is transmitted and/or received based on the first signaling, the second moment being after the first moment; and
a first transmitting unit 530, used for transmitting and/or receiving the base station adaptive information based on the validation time.

In an embodiment, the second moment includes at least one of:
any candidate moment, a maximum value of multiple candidate moments, a minimum value of multiple candidate moments, or a sum of multiple candidate moments.

In an embodiment, the candidate moment includes at least one of:
a candidate moment after a first time constant;
a candidate moment at which a Nth first reference signal is received or transmitted, N being a natural number greater than or equal to 1;
a candidate moment at which Mth first information is received or transmitted, M being a natural number greater than or equal to 1;
a candidate moment at which hybrid automatic repeat request (HARQ) information of the first signaling is fed back;
a candidate moment at which acknowledgement character (ACK) information of the first signaling is fed back;
a candidate moment after a processing time of the first signaling;
a candidate moment after a first minimum duration of change based on the base station spatial-domain adaptive information;
a candidate moment after a second minimum duration of change based on the base station power-domain adaptive information;
a candidate moment after a third minimum duration of change based on the base station DTX/DRX adaptive information;
a candidate moment within a time window with a moment at which a second reference signal is transmitted and/or received being an end point;
a candidate moment at which Kth first information after a second reference signal is reported, K being a natural number greater than or equal to 1; or
a candidate moment after a processing delay for changing transmission configuration information.

In an embodiment, the validation time is a first time window starting from the second moment.

In an embodiment, the first time window includes at least one of:
a time window for receiving or transmitting A first reference signals, A being a natural number greater than or equal to 1;
a time window for receiving or transmitting B pieces of first information, B being a natural number greater than or equal to 1; or
a time window for transmitting or receiving C pieces of first information after the second reference signal, C being a natural number greater than or equal to 1.

In an embodiment, the first time constant is a time constant with a granularity of at least one of a symbol, a slot, a subframe, or a radio frame;
the first reference signal is a channel state indicator-reference signal (CSI-RS);
the first information is a channel state indicator (CSI);
the second reference signal is a reference CSI-RS;
the transmission configuration information includes at least one of a bandwidth partial (BWP), a secondary cell (Scell), configured grant (CG), or semi-persistent scheduling (SPS).

In an embodiment, the signaling receiving unit is further used for:
receiving a second signaling, and changing the transmission configuration information based on the second signaling;
the first moment being a moment at which the first signaling is received based on unchanged transmission configuration information, and the candidate moment being a moment determined based on changed transmission configuration information.

In an embodiment, in case that the base station adaptive information includes the base station DTX/DRX adaptive information as well as the base station spatial-domain adaptive information and/or the base station power-domain adaptive information,
the validation time of the base station spatial-domain adaptive information and/or the base station power-domain adaptive information is determined based on the base station DTX/DRX adaptive information.

In an embodiment, in case that the validation time of the base station spatial-domain adaptive information and/or the base station power-domain adaptive information falls within a DTX/DRX inactive period indicated by the base station DTX/DRX adaptive information, the first time unit is further used for making at least one of following adjustments to the validation time of the base station spatial-domain adaptive information and/or the base station power-domain adaptive information:
postponing the validation time of the base station spatial-domain adaptive information and/or the base station power-domain adaptive information to a start of next active period of the DTX/DRX;
terminating the validation time of the base station spatial-domain adaptive information and/or the base station power-domain adaptive information; or
suspending and postponing the validation time of the base station spatial-domain adaptive information and/or the base station power-domain adaptive information to a moment after a start of next active period of the DTX/DRX.

In an embodiment, the first signaling is configured based on a radio resource control (RRC) signaling, and the first signaling is used to indicate an index of the base station adaptive information, or to indicate activation and/or deactivation of an index of the base station adaptive information.

In an embodiment, the base station spatial-domain adaptive information includes at least one piece of spatial-domain information; the at least one piece of spatial-domain information includes at least one of: at least one piece of antenna port information, at least one piece of antenna port muting pattern information, at least one piece of CSI-RS resource information, or at least one piece of CSI reporting information; and/or
the base station power-domain adaptive information includes at least one piece of power-domain information; the at least one piece of power-domain information includes at least one of: at least one piece of power-related information for an antenna port, at least one piece of power-related information for an antenna port muting pattern, at least one piece of power-related information for a CSI-RS resource, or at least one piece of power-related information for a CSI reporting; and/or
the base station DTX/DRX adaptive information includes DTX/DRX configuration information, the DTX/DRX configuration information including at least one of: an active period of DTX/DRX periodic data transmission, an inactive period without data transmission, or time position information for a start of DTX/DRX transmission.

It should be noted here that the configuration provided in the embodiments of the present application may implement all the method steps implemented by the method embodiments in which the execution subject is the terminal, and may achieve the same effects. The same parts and beneficial effects in the embodiments as those in the method embodiments are not described in detail.

FIG. 6 is a fourth schematic diagram of a transmission apparatus according to an embodiment of the present application. As shown in FIG. 6, the transmission apparatus including:
a signaling transmitting unit 610, used for transmitting a first signaling at a third moment, the first signaling indicating transmission of base station adaptive information, the base station adaptive information including at least one of base station spatial-domain adaptive information, base station power-domain adaptive information, or base station discontinuous transmission (DTX)/discontinuous reception (DRX) adaptive information;
a second time unit 620, used for obtaining validation time of the base station adaptive information, the validation time including a second moment at which the base station adaptive information is transmitted and/or received based on the first signaling, the second moment being after the third moment; and
a second transmitting unit 630, used for transmitting and/or receiving the base station adaptive information based on the validation time.

In an embodiment, according to the transmission method of an embodiment of the present application, the second moment includes at least one of:
any candidate moment, a maximum value of multiple candidate moments, a minimum value of multiple candidate moments, or a sum of multiple candidate moments.

In an embodiment, the candidate moment includes at least one of:
a candidate moment after a first time constant;
a candidate moment at which a Nth first reference signal is received or transmitted, N being a natural number greater than or equal to 1;
a candidate moment at which Mth first information is received or transmitted, M being a natural number greater than or equal to 1;
a candidate moment at which hybrid automatic repeat request (HARQ) information of the first signaling is fed back;
a candidate moment at which acknowledgement character (ACK) information of the first signaling is fed back;
a candidate moment after a processing time of the first signaling;
a candidate moment after a first minimum duration of change based on the base station spatial-domain adaptive information;
a candidate moment after a second minimum duration of change based on the base station power-domain adaptive information;
a candidate moment after a third minimum duration of change based on the base station DTX/DRX adaptive information;
a candidate moment within a time window with a moment at which a second reference signal is transmitted and/or received being an end point;
a candidate moment at which Kth first information after a second reference signal is reported, K being a natural number greater than or equal to 1; or
a candidate moment after a processing delay for changing transmission configuration information.

In an embodiment, the validation time is a first time window starting from the second moment.

In an embodiment, the first time window includes at least one of:
a time window for receiving or transmitting A first reference signals, A being a natural number greater than or equal to 1;
a time window for receiving or transmitting B pieces of first information, B being a natural number greater than or equal to 1; or
a time window for transmitting or receiving C pieces of first information after the second reference signal, C being a natural number greater than or equal to 1.

In an embodiment, the first time constant is a time constant with a granularity of at least one of a symbol, a slot, a subframe, or a radio frame;
the first reference signal is a channel state indicator-reference signal (CSI-RS);
the first information is a channel state indicator (CSI);
the second reference signal is a reference CSI-RS;
the transmission configuration information includes at least one of a bandwidth partial (BWP), a secondary cell (Scell), configured grant (CG), or semi-persistent scheduling (SPS).

In an embodiment, the signaling transmitting unit is further used for:
transmitting a second signaling, the second signaling indicating changing the transmission configuration information;
the third moment being a moment at which the first signaling is transmitted based on unchanged transmission configuration information, and the candidate moment being a moment determined based on changed transmission configuration information.

In an embodiment, in case that the base station adaptive information includes the base station DTX/DRX adaptive information as well as the base station spatial-domain adaptive information and/or the base station power-domain adaptive information,
the validation time of the base station spatial-domain adaptive information and/or the base station power-domain adaptive information is determined based on the base station DTX/DRX adaptive information.

In an embodiment, in case that the validation time of the base station spatial-domain adaptive information and/or the base station power-domain adaptive information falls within a DTX/DRX inactive period indicated by the base station DTX/DRX adaptive information, the second time unit is further used for making at least one of following adjustments to the validation time of the base station spatial-domain adaptive information and/or the base station power-domain adaptive information:
postponing the validation time of the base station spatial-domain adaptive information and/or the base station power-domain adaptive information to a starting time of next active period of the DTX/DRX;
terminating the validation time of the base station spatial-domain adaptive information and/or the base station power-domain adaptive information; or
suspending and postponing the validation time of the base station spatial-domain adaptive information and/or the base station power-domain adaptive information to a moment after a start of next active period of the DTX/DRX.

In an embodiment, the first signaling is configured based on a radio resource control (RRC) signaling, and the first signaling is used to indicate an index of the base station adaptive information, or to indicate activation and/or deactivation of an index of the base station adaptive information.

In an embodiment, according to the transmission method of an embodiment of the present application, the base station spatial-domain adaptive information includes at least one piece of spatial-domain information; the at least one piece of spatial-domain information includes at least one of: at least one piece of antenna port information, at least one piece of antenna port muting pattern information, at least one piece of CSI-RS resource information, or at least one piece of CSI reporting information; and/or
the base station power-domain adaptive information includes at least one piece of power-domain information; the at least one piece of power-domain information includes at least one of: at least one piece of power-related information for an antenna port, at least one piece of power-related information for an antenna port muting pattern, at least one piece of power-related information for a CSI-RS resource, or at least one piece of power-related information for a CSI reporting; and/or
the base station DTX/DRX adaptive information includes DTX/DRX configuration information, the DTX/DRX configuration information including at least one of: an active period of DTX/DRX periodic data transmission, an inactive period without data transmission, or time position information for a start of DTX/DRX transmission.

It should be noted here that the configuration provided in the embodiments of the present application may implement all the method steps implemented by the method embodiments in which the execution subject is the base station, and may achieve the same effects. The same parts and beneficial effects in the embodiments as those in the method embodiments are not described in detail.

It should be noted that, the division of units/modules in the embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.

If the integrated unit is implemented in the form of a software functional unit and sold or used as an independent product, it may be stored in a computer readable storage medium. Based on such understanding, the solutions of the present application in essence or a part of the solutions that contributes to the related art, or all or part of the solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that may store program codes such as U disk, mobile hard disk, read-only memory (ROM), random access memory (RAM), magnetic disk, or optical disk.

An embodiment of the present application further provides a processor-readable storage medium, where the processor-readable storage medium stores a computer program, the computer program is used to cause a processor to execute the method provided by the embodiments as described above, the method may include:
receiving a first signaling at a first moment, the first signaling indicating transmission of base station adaptive information, the base station adaptive information including at least one of base station spatial-domain adaptive information, base station power-domain adaptive information, or base station discontinuous transmission (DTX)/discontinuous receiving (DRX) adaptive information;
obtaining validation time of the base station adaptive information, the validation time including a second moment at which the terminal or a base station transmits and/or receives the base station adaptive information based on indication of the first signaling, the second moment being after the first moment; and
transmitting and/or receiving the base station adaptive information based on the validation time.

Alternatively, the method may include:
transmitting a first signaling at a third moment, the first signaling indicating transmission of base station adaptive information, the base station adaptive information including at least one of base station spatial-domain adaptive information, base station power-domain adaptive information, or base station discontinuous transmission (DTX)/discontinuous reception (DRX) adaptive information;
obtaining validation time of the base station adaptive information, the validation time including a second moment at which a terminal or the base station transmits and/or receives the base station adaptive information based on indication of the first signaling, the second moment being after the third moment; and
transmitting and/or receiving the base station adaptive information based on the validation time.

It should be noted that the processor-readable storage medium may be any available medium or data storage device that may be accessed by the processor, including but not limited to, a magnetic storage (e.g., a floppy disk, a hard disk, a magnetic tape, a magneto-optical disk (MO), etc.), optical memory (such as CD, DVD, BD, HVD, etc.), and a semiconductor memory (such as ROM, EPROM, EEPROM, non-volatile memory (NAND FLASH), solid-state drive (SSD)), etc.

It should also be noted that the solutions provided by the embodiments of the present application may be applicable to various systems, especially a 5G system. For example, the applicable systems may be a global system of mobile communication (GSM) system, a code division multiple access (CDMA) system, a wideband code division multiple access (WCDMA) general packet radio service (GPRS) system, a long term evolution (LTE) system, an LTE frequency division duplex (FDD) system, an LTE time division duplex (TDD) system, a long term evolution advanced (LTE-A) system, a universal mobile telecommunication system (UMTS), a worldwide interoperability for microwave access (WiMAX) system, a 5G new radio (NR) system, etc. These various systems include a terminal and a network device, and may also include a core network part, such as an evolved packet system (EPS), a 5G system (5GS), and the like.

The terminal in the embodiments of the present application may be a device that provides voice and/or data connectivity to a user, a hand-held device with a wireless connection function, or other processing device connected to a wireless modem. In different systems, the names of the terminal may be different. For example, in the 5G system, the terminal may be called as user equipment (UE). A wireless terminal may communicate with one or more core networks (CN) via a radio access network (RAN), and the wireless terminal may be a mobile terminal, such as a mobile phone (or referred to as cellular phone) and a computer with mobile terminal, e.g., a portable mobile device, a pocket-sized mobile device, a hand-held mobile device, a computer-built mobile device or a vehicle-mounted mobile device, which exchanges language and/or data with the radio access network. For example, a personal communication service (PCS) phone, a radio phone, a session initiated protocol (SIP) phone, a wireless local loop (WLL) station, a personal digital assistant (PDA) and other devices. A wireless terminal may also be called a system, a subscriber unit, a subscriber station, a mobile station, a mobile, a remote station, an access point, a remote terminal, an access terminal, a user terminal, a user agent, and a user device, which are not limited in the embodiments of the present application.

The network side device in the embodiments of the present application may be a base station, and the base station may include multiple cells providing services for the terminal. Depending on the specific application, the network side device may also be called an access point, or may be a device in the access network that communicates with radio terminal through one or more sectors on the air interface, or other names. Network device may be used to exchange received air frames with internet protocol (IP) packets, and act as a router between radio terminal and the rest of the access network, and the rest of the access network may include an IP communication network. The network side device may also coordinate attribute management for the air interface. For example, the network device in the embodiments of the present application may be a base transceiver station (BTS) in a global system for mobile communications (GSM) or a code division multiple access (CDMA), may also be a node B in a wide-band code division multiple access (WCDMA), may also be an evolutional node B (eNB or e-Node B) in a long term evolution (LTE) system, a 5G base station (gNB) in 5G network architecture (next generation system), may also be a Home evolved Node B (HeNB), a relay node (relay node), a femto, a pico base station (pico), etc., which are not limited in the embodiments of the present application. In some network structures, a network device may include a centralized unit (CU) node and a distributed unit (DU) node, and the centralized unit and the distributed unit may also be geographically separated.

Multi-input multi-output (MIMO) transmission may be performed between the network device and the terminal using one or more antennas and the MIMO transmission may be single user MIMO (SU-MIMO) or multiple user MIMO (MU-MIMO). According to the form and number of antenna combinations, MIMO transmission may be 2D-MIMO, 3D-MIMO, FD-MIMO, or massive-MIMO, and may also be diversity transmission, precoding transmission, or beamforming transmission.

As will be appreciated by those skilled in the art, embodiments of the present application may be provided as methods, systems, or computer program products. Therefore, the present application may take the form of an entirely hardware embodiment, an entirely software embodiment, or an embodiment combining software and hardware. Moreover, the present application may take the form of a computer program product implemented on one or more computer-usable storage media having computer-usable program code, including but not limited to disk storage and optical storage, etc.

The present application is described with reference to flow charts and/or block diagrams of methods, apparatus (systems), and computer program products according to embodiments of the present application. It will be understood that each flow and/or block in the flow charts and/or block diagrams, and combinations thereof may be implemented by computer-executable instructions. These computer-executable instructions may be provided to processors of a general purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These processor-executable instructions may also be stored in a processor readable memory capable of directing a computer or other programmable data processing apparatus to operate in a particular manner, and the instructions stored in the processor readable memory may result in a manufacture including instruction means, the instruction means may perform the functions specified in one or more flows of the flowchart and/or one or more blocks of the block diagram.

These processor-executable instructions may also be loaded onto a computer or other programmable data processing device to cause a series of operational steps to be performed on the computer or other programmable device to produce a computer-implemented process and instructions performed on the computer or other programmable devices provide steps for performing the functions specified in one or more flows of the flowchart and/or one or more blocks of the block diagram.

It will be apparent to those skilled in the art that various modifications and variations may be made in the present application without departing from the scope of the present application. Thus, provided that these modifications and variations of the present application fall within the scope of the claims of the present application and their equivalents, the present application is also intended to cover such modifications and variations.

## Claims

1. A transmission method, performed by a terminal, the transmission method comprising:
receiving a first signaling at a first moment, the first signaling indicating transmission of base station adaptive information, the base station adaptive information comprising at least one of base station spatial-domain adaptive information, base station power-domain adaptive information, or base station discontinuous transmission (DTX)/discontinuous receiving (DRX) adaptive information;
obtaining validation time of the base station adaptive information, the validation time comprising a second moment at which the terminal or a base station transmits and/or receives the base station adaptive information based on indication of the first signaling, the second moment being after the first moment; and
transmitting and/or receiving the base station adaptive information based on the validation time.

2. The transmission method of claim 1, wherein the second moment comprises at least one of:
any candidate moment, a maximum value of multiple candidate moments, a minimum value of multiple candidate moments, or a sum of multiple candidate moments.

3. The transmission method of claim 2, wherein the candidate moment comprises at least one of:
a candidate moment after a first time constant;
a candidate moment at which a Nth first reference signal is received or transmitted, N being a natural number greater than or equal to 1;
a candidate moment at which Mth first information is received or transmitted, M being a natural number greater than or equal to 1;
a candidate moment at which hybrid automatic repeat request (HARQ) information of the first signaling is fed back;
a candidate moment at which acknowledgement character (ACK) information of the first signaling is fed back;
a candidate moment after a processing time of the first signaling;
a candidate moment after a first minimum duration during which the base station performs change based on the base station spatial-domain adaptive information;
a candidate moment after a second minimum duration during which the base station performs change based on the base station power-domain adaptive information;
a candidate moment after a third minimum duration during which the base station performs change based on the base station DTX/DRX adaptive information;
a candidate moment within a time window with a moment at which a second reference signal is transmitted and/or received being an end point;
a candidate moment at which Kth first information after a second reference signal is reported, K being a natural number greater than or equal to 1; or
a candidate moment after a processing delay for changing transmission configuration information.

4. The transmission method of claim 3, wherein the first time constant is a time constant with a granularity of at least one of a symbol, a slot, a subframe, or a radio frame;
the first reference signal is a channel state indicator-reference signal (CSI-RS);
the first information is a channel state indicator (CSI);
the second reference signal is a reference CSI-RS;
the transmission configuration information comprises at least one of a bandwidth partial (BWP), a secondary cell (Scell), configured grant (CG), or semi-persistent scheduling (SPS).

5. The transmission method of claim 3, further comprising:
receiving a second signaling, and changing the transmission configuration information based on the second signaling;
the first moment being a moment at which the first signaling is received based on unchanged transmission configuration information, and the candidate moment being a moment determined based on changed transmission configuration information.

6. The transmission method of claim 1, wherein the validation time is a first time window starting from the second moment.

7. The transmission method of claim 6, wherein the first time window comprises at least one of:
a time window for receiving or transmitting A first reference signals, A being a natural number greater than or equal to 1;
a time window for receiving or transmitting Bth first information, B being a natural number greater than or equal to 1; or
a time window for transmitting or receiving C pieces of first information after the second reference signal, C being a natural number greater than or equal to 1.

8. The transmission method of any of claims 1 to 7, wherein in case that the base station adaptive information comprises the base station DTX/DRX adaptive information as well as the base station spatial-domain adaptive information and/or the base station power-domain adaptive information,
the validation time of the base station spatial-domain adaptive information and/or the base station power-domain adaptive information is determined based on the base station DTX/DRX adaptive information.

9. The transmission method of claim 8, wherein in case that the validation time of the base station spatial-domain adaptive information and/or the base station power-domain adaptive information falls within a DTX/DRX inactive period indicated by the base station DTX/DRX adaptive information, the validation time of the base station spatial-domain adaptive information and/or the base station power-domain adaptive information is adjusted by at least one of:
postponing the validation time of the base station spatial-domain adaptive information and/or the base station power-domain adaptive information to a start of next active period of the DTX/DRX;
terminating the validation time of the base station spatial-domain adaptive information and/or the base station power-domain adaptive information; or
suspending the validation time of the base station spatial-domain adaptive information and/or the base station power-domain adaptive information, and postponing it to a moment after a start of next active period of the DTX/DRX.

10. The transmission method of any of claims 1 to 7, wherein the first signaling is configured based on a radio resource control (RRC) signaling, and the first signaling is used to indicate an index of the base station adaptive information, or to indicate activation and/or deactivation of an index of the base station adaptive information.

11. The transmission method of any of claims 1 to 7, wherein the base station spatial-domain adaptive information comprises at least one piece of spatial-domain information; the at least one piece of spatial-domain information comprises at least one of: at least one piece of antenna port information, at least one piece of antenna port muting pattern information, at least one piece of CSI-RS resource information, or at least one piece of CSI reporting information; and/or
the base station power-domain adaptive information comprises at least one piece of power-domain information; the at least one piece of power-domain information comprises at least one of: at least one piece of power-related information for an antenna port, at least one piece of power-related information for an antenna port muting pattern, at least one piece of power-related information for a CSI-RS resource, or at least one piece of power-related information for a CSI reporting; and/or
the base station DTX/DRX adaptive information comprises DTX/DRX configuration information, the DTX/DRX configuration information comprising at least one of: an active period of DTX/DRX periodic data transmission, an inactive period without data transmission, or time position information for a start of DTX/DRX transmission.

12. A transmission method, performed by a base station, the transmission method comprising:
transmitting a first signaling at a third moment, the first signaling indicating transmission of base station adaptive information, the base station adaptive information comprising at least one of base station spatial-domain adaptive information, base station power-domain adaptive information, or base station discontinuous transmission (DTX)/discontinuous reception (DRX) adaptive information;
obtaining validation time of the base station adaptive information, the validation time comprising a second moment at which a terminal or the base station transmits and/or receives the base station adaptive information based on indication of the first signaling, the second moment being after the third moment; and
transmitting and/or receiving the base station adaptive information based on the validation time.

13. The transmission method of claim 12, wherein the second moment comprises at least one of:
any candidate moment, a maximum value of multiple candidate moments, a minimum value of multiple candidate moments, or a sum of multiple candidate moments.

14. The transmission method of claim 13, wherein the candidate moment comprises at least one of:
a candidate moment after a first time constant;
a candidate moment at which a Nth first reference signal is received or transmitted, N being a natural number greater than or equal to 1;
a candidate moment at which Mth first information is received or transmitted, M being a natural number greater than or equal to 1;
a candidate moment at which hybrid automatic repeat request (HARQ) information of the first signaling is fed back;
a candidate moment at which acknowledgement character (ACK) information of the first signaling is fed back;
a candidate moment after a processing time of the first signaling;
a candidate moment after a first minimum duration during which the base station performs change based on the base station spatial-domain adaptive information;
a candidate moment after a second minimum duration during which the base station performs change based on the base station power-domain adaptive information;
a candidate moment after a third minimum duration during which the base station performs change based on the base station DTX/DRX adaptive information;
a candidate moment within a time window with a moment at which a second reference signal is transmitted and/or received being an end point;
a candidate moment at which Kth first information after a second reference signal is reported, K being a natural number greater than or equal to 1; or
a candidate moment after a processing delay for changing transmission configuration information.

15. The transmission method of claim 14, wherein the first time constant is a time constant with a granularity of at least one of a symbol, a slot, a subframe, or a radio frame;
the first reference signal is a channel state indicator-reference signal (CSI-RS);
the first information is a channel state indicator (CSI);
the second reference signal is a reference CSI-RS;
the transmission configuration information comprises at least one of a bandwidth partial (BWP), a secondary cell (Scell), configured grant (CG), or semi-persistent scheduling (SPS).

16. The transmission method of claim 14, further comprising:
transmitting a second signaling, the second signaling indicating changing the transmission configuration information;
the third moment being a moment at which the first signaling is transmitted based on unchanged transmission configuration information, and the candidate moment being a moment determined based on changed transmission configuration information.

17. The transmission method of claim 12, wherein the validation time is a first time window starting from the second moment.

18. The transmission method of claim 17, wherein the first time window comprises at least one of:
a time window for receiving or transmitting A first reference signals, A being a natural number greater than or equal to 1;
a time window for receiving or transmitting B pieces of first information, B being a natural number greater than or equal to 1; or
a time window for transmitting or receiving C pieces of first information after the second reference signal, C being a natural number greater than or equal to 1.

19. The transmission method of any of claims 12 to 18, wherein in case that the base station adaptive information comprises the base station DTX/DRX adaptive information as well as the base station spatial-domain adaptive information and/or the base station power-domain adaptive information,
the validation time of the base station spatial-domain adaptive information and/or the base station power-domain adaptive information is determined based on the base station DTX/DRX adaptive information.

20. The transmission method of claim 19, wherein in case that the validation time of the base station spatial-domain adaptive information and/or the base station power-domain adaptive information falls within a DTX/DRX inactive period indicated by the base station DTX/DRX adaptive information, the validation time of the base station spatial-domain adaptive information and/or the base station power-domain adaptive information is adjusted by at least one of:
postponing the validation time of the base station spatial-domain adaptive information and/or the base station power-domain adaptive information to a starting time of next active period of the DTX/DRX;
terminating the validation time of the base station spatial-domain adaptive information and/or the base station power-domain adaptive information; or
suspending the validation time of the base station spatial-domain adaptive information and/or the base station power-domain adaptive information, and postponing it to a moment after a start of next active period of the DTX/DRX.

21. The transmission method of any of claims 12 to 18, wherein the first signaling is configured based on a radio resource control (RRC) signaling, and the first signaling is used to indicate an index of the base station adaptive information, or to indicate activation and/or deactivation of an index of the base station adaptive information.

22. The transmission method of any of claims 12 to 18, wherein the base station spatial-domain adaptive information comprises at least one piece of spatial-domain information; the at least one piece of spatial-domain information comprises at least one of: at least one piece of antenna port information, at least one piece of antenna port muting pattern information, at least one piece of CSI-RS resource information, or at least one piece of CSI reporting information; and/or
the base station power-domain adaptive information comprises at least one piece of power-domain information; the at least one piece of power-domain information comprises at least one of: at least one piece of power-related information for an antenna port, at least one piece of power-related information for an antenna port muting pattern, at least one piece of power-related information for a CSI-RS resource, or at least one piece of power-related information for a CSI reporting; and/or
the base station DTX/DRX adaptive information comprises DTX/DRX configuration information, the DTX/DRX configuration information comprising at least one of: an active period of DTX/DRX periodic data transmission, an inactive period without data transmission, or time position information for a start of DTX/DRX transmission.

23. A transmission apparatus, comprising: a memory, a transceiver, and a processor, wherein the memory is used for storing a computer program; the transceiver is used for receiving and transmitting data under control of the processor; and the processor is used for reading the computer program in the memory and performing following operations:
receiving a first signaling at a first moment, the first signaling indicating transmission of base station adaptive information, the base station adaptive information comprising at least one of base station spatial-domain adaptive information, base station power-domain adaptive information, or base station discontinuous transmission (DTX)/discontinuous receiving (DRX) adaptive information;
obtaining validation time of the base station adaptive information, the validation time comprising a second moment at which the base station adaptive information is transmitted and/or received based on the first signaling, the second moment being after the first moment; and
transmitting and/or receiving the base station adaptive information based on the validation time.

24. The transmission apparatus of claim 23, wherein the second moment comprises at least one of:
any candidate moment, a maximum value of multiple candidate moments, a minimum value of multiple candidate moments, or a sum of multiple candidate moments.

25. The transmission apparatus of claim 24, wherein the candidate moment comprises at least one of:
a candidate moment after a first time constant;
a candidate moment at which a Nth first reference signal is received or transmitted, N being a natural number greater than or equal to 1;
a candidate moment at which Mth first information is received or transmitted, M being a natural number greater than or equal to 1;
a candidate moment at which hybrid automatic repeat request (HARQ) information of the first signaling is fed back;
a candidate moment at which acknowledgement character (ACK) information of the first signaling is fed back;
a candidate moment after a processing time of the first signaling;
a candidate moment after a first minimum duration of change based on the base station spatial-domain adaptive information;
a candidate moment after a second minimum duration of change based on the base station power-domain adaptive information;
a candidate moment after a third minimum duration of change based on the base station DTX/DRX adaptive information;
a candidate moment within a time window with a moment at which a second reference signal is transmitted and/or received being an end point;
a candidate moment at which Kth first information after a second reference signal is reported, K being a natural number greater than or equal to 1; or
a candidate moment after a processing delay for changing transmission configuration information.

26. The transmission apparatus of claim 25, wherein the first time constant is a time constant with a granularity of at least one of a symbol, a slot, a subframe, or a radio frame;
the first reference signal is a channel state indicator-reference signal (CSI-RS);
the first information is a channel state indicator (CSI);
the second reference signal is a reference CSI-RS;
the transmission configuration information comprises at least one of a bandwidth partial (BWP), a secondary cell (Scell), configured grant (CG), or semi-persistent scheduling (SPS).

27. The transmission apparatus of claim 25, wherein the processor further performs following operation:
receiving a second signaling, and changing the transmission configuration information based on the second signaling;
the first moment being a moment at which the first signaling is received based on unchanged transmission configuration information, and the candidate moment being a moment determined based on changed transmission configuration information.

28. The transmission apparatus of claim 23, wherein the validation time is a first time window starting from the second moment.

29. The transmission apparatus of claim 28, wherein the first time window comprises at least one of:
a time window for receiving or transmitting A first reference signals, A being a natural number greater than or equal to 1;
a time window for receiving or transmitting B pieces of first information, B being a natural number greater than or equal to 1; or
a time window for transmitting or receiving C pieces of first information after the second reference signal, C being a natural number greater than or equal to 1.

30. The transmission apparatus of any of claims 23 to 29, wherein in case that the base station adaptive information comprises the base station DTX/DRX adaptive information as well as the base station spatial-domain adaptive information and/or the base station power-domain adaptive information,
the validation time of the base station spatial-domain adaptive information and/or the base station power-domain adaptive information is determined based on the base station DTX/DRX adaptive information.

31. The transmission apparatus of claim 30, wherein in case that the validation time of the base station spatial-domain adaptive information and/or the base station power-domain adaptive information falls within a DTX/DRX inactive period indicated by the base station DTX/DRX adaptive information, the validation time of the base station spatial-domain adaptive information and/or the base station power-domain adaptive information is adjusted by at least one of:
postponing the validation time of the base station spatial-domain adaptive information and/or the base station power-domain adaptive information to a start of next active period of the DTX/DRX;
terminating the validation time of the base station spatial-domain adaptive information and/or the base station power-domain adaptive information; or
suspending the validation time of the base station spatial-domain adaptive information and/or the base station power-domain adaptive information, and postponing it to a moment after a start of next active period of the DTX/DRX.

32. The transmission apparatus of any of claims 23 to 29, wherein the first signaling is configured based on a radio resource control (RRC) signaling, and the first signaling is used to indicate an index of the base station adaptive information, or to indicate activation and/or deactivation of an index of the base station adaptive information.

33. The transmission apparatus of any of claims 23 to 29, wherein the base station spatial-domain adaptive information comprises at least one piece of spatial-domain information; the at least one piece of spatial-domain information comprises at least one of: at least one piece of antenna port information, at least one piece of antenna port muting pattern information, at least one piece of CSI-RS resource information, or at least one piece of CSI reporting information; and/or
the base station power-domain adaptive information comprises at least one piece of power-domain information; the at least one piece of power-domain information comprises at least one of: at least one piece of power-related information for an antenna port, at least one piece of power-related information for an antenna port muting pattern, at least one piece of power-related information for a CSI-RS resource, or at least one piece of power-related information for a CSI reporting; and/or
the base station DTX/DRX adaptive information comprises DTX/DRX configuration information, the DTX/DRX configuration information comprising at least one of: an active period of DTX/DRX periodic data transmission, an inactive period without data transmission, or time position information for a start of DTX/DRX transmission.

34. A transmission apparatus, comprising: a memory, a transceiver, and a processor, wherein the memory is used for storing a computer program; the transceiver is used for receiving and transmitting data under control of the processor; and the processor is used for reading the computer program in the memory and performing following operations:
transmitting a first signaling at a third moment, the first signaling indicating transmission of base station adaptive information, the base station adaptive information comprising at least one of base station spatial-domain adaptive information, base station power-domain adaptive information, or base station discontinuous transmission (DTX)/discontinuous reception (DRX) adaptive information;
obtaining validation time of the base station adaptive information, the validation time comprising a second moment at which the base station adaptive information is transmitted and/or received based on the first signaling, the second moment being after the third moment; and
transmitting and/or receiving the base station adaptive information based on the validation time.

35. The transmission apparatus of claim 34, wherein the second moment comprises at least one of:
any candidate moment, a maximum value of multiple candidate moments, a minimum value of multiple candidate moments, or a sum of multiple candidate moments.

36. The transmission apparatus of claim 35, wherein the candidate moment comprises at least one of:
a candidate moment after a first time constant;
a candidate moment at which a Nth first reference signal is received or transmitted, N being a natural number greater than or equal to 1;
a candidate moment at which Mth first information is received or transmitted, M being a natural number greater than or equal to 1;
a candidate moment at which hybrid automatic repeat request (HARQ) information of the first signaling is fed back;
a candidate moment at which acknowledgment character (ACK) information of the first signaling is fed back;
a candidate moment after a processing time of the first signaling;
a candidate moment after a first minimum duration of change based on the base station spatial-domain adaptive information;
a candidate moment after a second minimum duration of change based on the base station power-domain adaptive information;
a candidate moment after a third minimum duration of change based on the base station DTX/DRX adaptive information;
a candidate moment within a time window with a moment at which a second reference signal is transmitted and/or received being an end point;
a candidate moment at which Kth first information after a second reference signal is reported, K being a natural number greater than or equal to 1; or
a candidate moment after a processing delay for changing transmission configuration information.

37. The transmission apparatus of claim 36, wherein the first time constant is a time constant with a granularity of at least one of a symbol, a slot, a subframe, or a radio frame;
the first reference signal is a channel state indicator-reference signal (CSI-RS);
the first information is a channel state indicator (CSI);
the second reference signal is a reference CSI-RS;
the transmission configuration information comprises at least one of a bandwidth partial (BWP), a secondary cell (Scell), configured grant (CG), or semi-persistent scheduling (SPS).

38. The transmission apparatus of claim 36, wherein the processor further performs following operation:
transmitting a second signaling, the second signaling indicating changing the transmission configuration information;
the third moment being a moment at which the first signaling is transmitted based on unchanged transmission configuration information, and the candidate moment being a moment determined based on changed transmission configuration information.

39. The transmission apparatus of claim 34, wherein the validation time is a first time window starting from the second moment.

40. The transmission apparatus of claim 39, wherein the first time window comprises at least one of:
a time window for receiving or transmitting A first reference signals, A being a natural number greater than or equal to 1;
a time window for receiving or transmitting B pieces of first information, B being a natural number greater than or equal to 1; or
a time window for transmitting or receiving C pieces of first information after the second reference signal, C being a natural number greater than or equal to 1.

41. The transmission apparatus of any of claims 34 to 40, wherein in case that the base station adaptive information comprises the base station DTX/DRX adaptive information as well as the base station spatial-domain adaptive information and/or the base station power-domain adaptive information,
the validation time of the base station spatial-domain adaptive information and/or the base station power-domain adaptive information is determined based on the base station DTX/DRX adaptive information.

42. The transmission apparatus of claim 41, wherein in case that the validation time of the base station spatial-domain adaptive information and/or the base station power-domain adaptive information falls within a DTX/DRX inactive period indicated by the base station DTX/DRX adaptive information, the validation time of the base station spatial-domain adaptive information and/or the base station power-domain adaptive information is adjusted by at least one of:
postponing the validation time of the base station spatial-domain adaptive information and/or the base station power-domain adaptive information to a starting time of next active period of the DTX/DRX;
terminating the validation time of the base station spatial-domain adaptive information and/or the base station power-domain adaptive information; or
suspending the validation time of the base station spatial-domain adaptive information and/or the base station power-domain adaptive information, and postponing it to a moment after a start of next active period of the DTX/DRX.

43. The transmission apparatus of any of claims 34 to 40, wherein the first signaling is configured based on a radio resource control (RRC) signaling, and the first signaling is used to indicate an index of the base station adaptive information, or to indicate activation and/or deactivation of an index of the base station adaptive information.

44. The transmission apparatus of any of claims 34 to 40, wherein the base station spatial-domain adaptive information comprises at least one piece of spatial-domain information; the at least one piece of spatial-domain information comprises at least one of: at least one piece of antenna port information, at least one piece of antenna port muting pattern information, at least one piece of CSI-RS resource information, or at least one piece of CSI reporting information; and/or
the base station power-domain adaptive information comprises at least one piece of power-domain information; the at least one piece of power-domain information comprises at least one of: at least one piece of power-related information for an antenna port, at least one piece of power-related information for an antenna port muting pattern, at least one piece of power-related information for a CSI-RS resource, or at least one piece of power-related information for a CSI reporting; and/or
the base station DTX/DRX adaptive information comprises DTX/DRX configuration information, the DTX/DRX configuration information comprising at least one of: an active period of DTX/DRX periodic data transmission, an inactive period without data transmission, or time position information for a start of DTX/DRX transmission.

45. A transmission apparatus, comprising:
a signaling receiving unit, used for receiving a first signaling at a first moment, the first signaling indicating transmission of base station adaptive information, the base station adaptive information comprising at least one of base station spatial-domain adaptive information, base station power-domain adaptive information, or base station discontinuous transmission (DTX)/discontinuous receiving (DRX) adaptive information;
a first time unit, used for obtaining validation time of the base station adaptive information, the validation time comprising a second moment at which the base station adaptive information is transmitted and/or received based on the first signaling, the second moment being after the first moment; and
a first transmitting unit, used for transmitting and/or receiving the base station adaptive information based on the validation time.

46. The transmission apparatus of claim 45, wherein the second moment comprises at least one of:
any candidate moment, a maximum value of multiple candidate moments, a minimum value of multiple candidate moments, or a sum of multiple candidate moments.

47. The transmission apparatus of claim 46, wherein the candidate moment comprises at least one of:
a candidate moment after a first time constant;
a candidate moment at which a Nth first reference signal is received or transmitted, N is being natural number greater than or equal to 1;
a candidate moment at which Mth first information is received or transmitted, M being a natural number greater than or equal to 1;
a candidate moment at which hybrid automatic repeat request (HARQ) information of the first signaling is fed back;
a candidate moment at which acknowledgment character (ACK) information of the first signaling is fed back;
a candidate moment after a processing time of the first signaling;
a candidate moment after a first minimum duration during which the base station performs change based on the base station spatial-domain adaptive information;
a candidate moment after a second minimum duration during which the base station performs change based on the base station power-domain adaptive information;
a candidate moment after a third minimum duration during which the base station performs change based on the base station DTX/DRX adaptive information;
a candidate moment within a time window with an end point of a moment at which a second reference signal is transmitted and/or received;
a candidate moment at which Kth first information after a second reference signal is reported, K being a natural number greater than or equal to 1; or
a candidate moment after a processing delay for changing transmission configuration information.

48. The transmission apparatus of claim 47, wherein the first time constant is a time constant with a granularity of at least one of a symbol, a slot, a subframe, or a radio frame;
the first reference signal is a channel state indicator-reference signal (CSI-RS);
the first information is a channel state indicator (CSI);
the second reference signal is a reference CSI-RS;
the transmission configuration information comprises at least one of a bandwidth partial (BWP), a secondary cell (Scell), configured grant (CG), or semi-persistent scheduling (SPS).

49. The transmission apparatus of claim 47, wherein the signaling receiving unit is further used for:
receiving a second signaling, and changing the transmission configuration information based on the second signaling;
the first moment being a moment at which the first signaling is received based on unchanged transmission configuration information, and the candidate moment being a moment determined based on changed transmission configuration information.

50. The transmission apparatus of claim 45, wherein the validation time is a first time window starting from the second moment.

51. The transmission apparatus of claim 50, wherein the first time window comprises at least one of:
a time window for receiving or transmitting A first reference signals, A being a natural number greater than or equal to 1;
a time window for receiving or transmitting B pieces of first information, B being a natural number greater than or equal to 1; or
a time window for transmitting or receiving C pieces of first information after the second reference signal, C being a natural number greater than or equal to 1.

52. The transmission apparatus of any of claims 45 to 51, wherein in case that the base station adaptive information comprises the base station DTX/DRX adaptive information as well as the base station spatial-domain adaptive information and/or the base station power-domain adaptive information,
the validation time of the base station spatial-domain adaptive information and/or the base station power-domain adaptive information is determined based on the base station DTX/DRX adaptive information.

53. The transmission apparatus of claim 52, wherein in case that the validation time of the base station spatial-domain adaptive information and/or the base station power-domain adaptive information falls within a DTX/DRX inactive period indicated by the base station DTX/DRX adaptive information, the first time unit is further used for making at least one of following adjustments to the validation time of the base station spatial-domain adaptive information and/or the base station power-domain adaptive information:
postponing the validation time of the base station spatial-domain adaptive information and/or the base station power-domain adaptive information to a starting point of next active period of the DTX/DRX;
terminating the validation time of the base station spatial-domain adaptive information and/or the base station power-domain adaptive information; or
suspending the validation time of the base station spatial-domain adaptive information and/or the base station power-domain adaptive information, and postponing it to a moment after a starting point of next active period of the DTX/DRX.

54. The transmission apparatus of any of claims 45 to 51, wherein the first signaling is configured based on a radio resource control (RRC) signaling, and the first signaling is used to indicate an index of the base station adaptive information, or to indicate activation and/or deactivation of an index of the base station adaptive information.

55. The transmission apparatus of any of claims 45 to 51, wherein the base station spatial-domain adaptive information comprises at least one piece of spatial-domain information; the at least one piece of spatial-domain information comprises at least one of: at least one piece of antenna port information, at least one piece of antenna port muting pattern information, at least one piece of CSI-RS resource information, or at least one piece of CSI reporting information; and/or
the base station power-domain adaptive information comprises at least one piece of power-domain information; the at least one piece of power-domain information comprises at least one of: at least one piece of power-related information for an antenna port, at least one piece of power-related information for an antenna port muting pattern, at least one piece of power-related information for a CSI-RS resource, or at least one piece of power-related information for a CSI reporting; and/or
the base station DTX/DRX adaptive information comprises DTX/DRX configuration information, the DTX/DRX configuration information comprising at least one of: an active period of DTX/DRX periodic data transmission, an inactive period without data transmission, or time position information for a start of DTX/DRX transmission.

56. A transmission apparatus, comprising:
a signaling transmitting unit, used for transmitting a first signaling at a third moment, the first signaling indicating transmission of base station adaptive information, the base station adaptive information comprising at least one of base station spatial-domain adaptive information, base station power-domain adaptive information, or base station discontinuous transmission (DTX)/discontinuous reception (DRX) adaptive information;
a second time unit, used for obtaining validation time of the base station adaptive information, the validation time comprising a second moment at which the base station adaptive information is transmitted and/or received based on the first signaling, the second moment being after the third moment; and
a second transmitting unit, used for transmitting and/or receiving the base station adaptive information based on the validation time.

57. The transmission apparatus of claim 56, wherein the second moment comprises at least one of:
any candidate moment, a maximum value of multiple candidate moments, a minimum value of multiple candidate moments, or a sum of multiple candidate moments.

58. The transmission apparatus of claim 57, wherein the candidate moment comprises at least one of:
a candidate moment after a first time constant;
a candidate moment at which a Nth first reference signal is received or transmitted, N being a natural number greater than or equal to 1;
a candidate moment at which Mth first information is received or transmitted, M being natural number greater than or equal to 1;
a candidate moment at which hybrid automatic repeat request (HARQ) information of the first signaling is fed back;
a candidate moment at which acknowledgment character (ACK) information of the first signaling is fed back;
a candidate moment after a processing time of the first signaling;
a candidate moment after a first minimum duration during which the base station performs change based on the base station spatial-domain adaptive information;
a candidate moment after a second minimum duration during which the base station performs change based on the base station power-domain adaptive information;
a candidate moment after a third minimum duration during which the base station performs change based on the base station DTX/DRX adaptive information;
a candidate moment within a time window with an end point of a moment at which a second reference signal is transmitted and/or received;
a candidate moment at which Kth first information after a second reference signal is reported, K being a natural number greater than or equal to 1; or
a candidate moment after a processing delay for changing transmission configuration information.

59. The transmission apparatus of claim 58, wherein the first time constant is a time constant with a granularity of at least one of a symbol, a slot, a subframe, or a radio frame;
the first reference signal is a channel state indicator-reference signal (CSI-RS);
the first information is a channel state indicator (CSI);
the second reference signal is a reference CSI-RS;
the transmission configuration information comprises at least one of a bandwidth partial (BWP), a secondary cell (Scell), configured grant (CG), or semi-persistent scheduling (SPS).

60. The transmission apparatus of claim 58, wherein the signaling transmitting unit is further used for:
transmitting a second signaling, the second signaling indicating changing the transmission configuration information;
the third moment being a moment at which the first signaling is transmitted based on unchanged transmission configuration information, and the candidate moment being a moment determined based on changed transmission configuration information.

61. The transmission apparatus of claim 56, wherein the validation time is a first time window starting from the second moment.

62. The transmission apparatus of claim 61, wherein the first time window comprises at least one of:
a time window for receiving or transmitting A first reference signals, A being a natural number greater than or equal to 1;
a time window for receiving or transmitting B pieces of first information, B being a natural number greater than or equal to 1; or
a time window for transmitting or receiving C pieces of first information after the second reference signal, C being a natural number greater than or equal to 1.

63. The transmission apparatus of any of claims 56 to 62, wherein in case that the base station adaptive information comprises the base station DTX/DRX adaptive information as well as the base station spatial-domain adaptive information and/or the base station power-domain adaptive information,
the validation time of the base station spatial-domain adaptive information and/or the base station power-domain adaptive information is determined based on the base station DTX/DRX adaptive information.

64. The transmission apparatus of claim 63, wherein in case that the validation time of the base station spatial-domain adaptive information and/or the base station power-domain adaptive information falls within a DTX/DRX inactive period indicated by the base station DTX/DRX adaptive information, the second time unit is further used for making at least one of following adjustments to the validation time of the base station spatial-domain adaptive information and/or the base station power-domain adaptive information:
postponing the validation time of the base station spatial-domain adaptive information and/or the base station power-domain adaptive information to a starting time of next active period of the DTX/DRX;
terminating the validation time of the base station spatial-domain adaptive information and/or the base station power-domain adaptive information; or
suspending the validation time of the base station spatial-domain adaptive information and/or the base station power-domain adaptive information, and postponing it to a moment after a starting point of next active period of the DTX/DRX.

65. The transmission apparatus of any of claims 56 to 62, wherein the first signaling is configured based on a radio resource control (RRC) signaling, and the first signaling is used to indicate an index of the base station adaptive information, or to indicate activation and/or deactivation of an index of the base station adaptive information.

66. The transmission apparatus of any of claims 56 to 62, wherein the base station spatial-domain adaptive information comprises at least one piece of spatial-domain information; the at least one piece of spatial-domain information comprises at least one of: at least one piece of antenna port information, at least one piece of antenna port muting pattern information, at least one piece of CSI-RS resource information, or at least one piece of CSI reporting information; and/or
the base station power-domain adaptive information comprises at least one piece of power-domain information; the at least one piece of power-domain information comprises at least one of: at least one piece of power-related information for an antenna port, at least one piece of power-related information for an antenna port muting pattern, at least one piece of power-related information for a CSI-RS resource, or at least one piece of power-related information for a CSI reporting; and/or
the base station DTX/DRX adaptive information comprises DTX/DRX configuration information, the DTX/DRX configuration information comprising at least one of: an active period of DTX/DRX periodic data transmission, an inactive period without data transmission, or time position information for a start of DTX/DRX transmission.

67. A processor readable storage medium storing a computer program, wherein the computer program is used for causing a processor to perform the method of any of claims 1 to 22.
